# EUROPEAN PATENT SPECIFICATION

(11) **EP 0 787 387 B1**
(45) Date of publication and mention of the grant of the patent: **29.11.2000**
(21) Application number: 95939479.2
(22) Date of filing: 10.10.1995
(51) Int. Cl.: H04B 7/195

(54) **OPTIMAL COVERAGE SATELLITE SYSTEM FOR A LOW EARTH ORBIT STORE-AND-FORWARD TELECOMMUNICATION NETWORK**
ÜBERTRAGUNGSANORDNUNG MIT SATELLITEN NIEDRIGER HÖHE UND OPTIMALER ERDBELEUCHTUNG FÜR EIN TELEKOMMUNIKATIONSNETZ MIT SPEICHERUNG UND DURCHSCHALTUNG
SYSTEMES DE SATELLITES A COUVERTURE OPTIMALE POUR UN RESEAU DE TELECOMMUNICATIONS A ENREGISTREMENT ET RETRANSMISSION ET A ORBITES TERRESTRES A BASSE ALTITUDE

(30) Priority: 12.10.1994 US 319819
(43) Date of publication of application: 06.08.1997
(73) Proprietor: LEO ONE IP, L.L.C., St. Louis, MO 63105 (US)
(72) Inventor: STURZA, Mark, A., Encino, CA 91436 (US); STUART, James, R., Louisville, CO 80027 (US); VILLALVAZO, Jose Manuel, Mexico, D.F. 09480 (MX); GOLDMAN, Erik, J., St. Charles, MO 63301 (US); PETERS, Arthur, K., Gainesville, FL 63105 (US); BAYER, David, A., Naples, FL 33963 (US); SMITH, Steven, W., Atlanta, GA 30319 (US)
(74) Representative: Powell, Stephen David
(86) International application number: US9512363
(87) International publication number: WO9612356

(56) References cited:
- EP-A- 0 094 253
- EP-A- 0 317 974
- EP-A- 0 562 374
- EP-A- 0 575 678
- WO-A-88/04866
- WO-A-92/00632
- DE-A- 4 304 916
- GB-A- 2 265 795
- US-A- 4 809 935
- US-A- 5 121 409
- US-A- 5 220 333
- IEEE JOURNAL ON SELECTED AREAS IN COMMUNICATION, vol. 10, no. 2, 1 February 1992 pages 418-427, XP 000272931 JAIDEV KANIYIL ET AL 'A GLOBAL MESSAGE NETWORK EMPLOYING LOW EARTH-ORBITING SATELLITES' cited in the application
- PROCEEDINGS OF THE IEEE, vol. 82, no. 4, April 1994 NEW-YORK,US, pages 585-589, XP 000451419 M.MILLER 'A Scenario for the Deployment of Interactive Multimedia Cable Television Systems in the United States in the 1990's'

## Description

### TECHNICAL FIELD

The present invention relates to the field of telecommunications. More particularly, this invention provides a non-geostationary, store-and-forward satellite communication system.

### BACKGROUND ART

### The Increasing Demand for Telecommunications Services

Over the past few decades, the demand for access to information has increased dramatically. Although conventional wire and fiber landlines, cellular networks and geostationary satellite systems have continued to expand in an attempt to meet this relentless growth in demand, the existing capacity is still not sufficient to meet the burgeoning global appetite for telecommunications services.

Through technology advances and regulatory changes, mobile communication services were offered on a commercial basis and grew to meet city, regional, national, and even international coverage needs through interconnection to public networks. As part of this evolution, wireless network standards have developed, on both a national and international basis, although then are still no truly international seamless wireless networks.

The decline in price of mobile services is one of the most important forces helping mobile communications reach broad-based markets and demonstrate rapid subscriber growth. The forces driving development of terrestrial wireless communications include advances in technology, declining prices and digital technology.

The resulting reductions in service and equipment cost attributable to the factors described above have allowed mobile communications to penetrate both business and consumer markets. The ultimate goal of wireless services is to provide two-way, ubiquitous, affordable communications services. It was only very recently, with the introduction of mobile satellite services, that this has been made possible. Indeed, mobile satellite services are the final step in the evolution of wireless communications service and are the only services which can provide this ultimate goal of ubiquitous wireless communication.

### Terrestrial-Based Mobile Communications Services

Currently, there are five major types of public mobile communications services used throughout the world:
1. Cellular, which provides primarily two-way, interconnected voice service with mobile, transportable, and portable telephones and providing a platform for data transmission;
2. Paging, which offers primarily one-way data transmission of numeric and alphanumeric messages;
3. Private Radio/SMR, which supplies primarily two-way voice service to closed user groups, but may also provide interconnected and mobile data services; SMR is a subset of private radio where service is provided on a commercial basis to businesses by carriers instead of the businesses owning their own systems;
4. Mobile Data, which provides networks for the exclusive transmission of mobile data; and
5. Personal Communications Services (PCS), which uses microcell technology, includes a wide range of voice and data services, for example, one-way outgoing PCS services, called CT-2, licensed in several countries such as the U.K., Taiwan and the Netherlands.

The growth and evolution of mobile services show that subscribers migrate from basic limited services to more advanced services over time. The growth of terrestrial-based mobile services will increase the awareness and demand for enhanced mobile satellite services. Moreover, mobile satellite services will be able to provide service in areas that cannot be economically served using terrestrial networks.

### Wireless Communications

As a result of the advances in technology, privatization, and decreasing prices on a worldwide basis, wireless communications have undergone a rapid increase in subscriber growth in the past several years. The result is that new enhanced wireless services tend to gain market acceptance more rapidly than did earlier wireless technologies. This phenomenon is attributable to the increasing functionality, value relative to price, and awareness among the population of each successive technology. Paging was introduced with only one-way, non-voice communications at a relatively high price. SMR provided two-way communications, but only within a closed user-group. Finally, cellular offered two-way interconnected voice communication with increasingly wide area coverage. The result of the rapid growth in wireless services worldwide builds an awareness and future demand for the benefits of advanced wireless communications.

### Mobile Satellite Services

Mobile satellite services are uniquely positioned to complete the evolution of wireless services. These services offer ubiquitous coverage, interconnection with other networks and a variety of services.

Mobile satellites will be able to support both voice and data terminals, depending upon the particular need of the user. In general, however, voice service will be expensive relative to data, due to the greater infrastructure required for voice communications and the generally greater efficiency of data communications.

Several previous efforts to enhance world-wide communications capabilities are briefly described below. Robert R. Newton discloses a *Multipurpose Satellite System* in his U.S. Patent No. 3,497,807. Newton describes a system in which "any point on earth is always within the line of sight of some satellite and any satellite is always within the line of sight of an adjacent satellite in the saint orbital plane." See Newton, Column 2, Lines 4-7.

U.S. Patent No. 4,135,156 by Sanders et al., entitled *Satellite Communications System Incorporating Ground Relay Station Through Which Messages Between Terminal Stations Are Routed*, contains a description of a "satellite relay communications system" that "includes a ground relay station arranged so that each message from one subscriber to another is relayed by the satellite relay to the ground relay, processed by the ground relay and then transmitted to the second subscriber by way of the satellite relay." See Sanders et al., Abstract, Lines 1-6.

Paul S. Visher discloses a *Satellite Arrangement Providing Effective Use of the Geostationary Orbit* in his U.S. Patent No. 4,375,697. His patent recites a "satellite squadron or cluster formation" which "is disposed in a predetermined location in...geostationary orbit...." See Visher, Abstract, Lines 1-2.

In their U.S. Patent No. 5,119,225, Michael Grant et al. explain their *Multiple Access Communication System*. The inventors describe a system that incorporates "a node spacecraft" in geostationary orbit that works in combination with "several user spacecraft" in low Earth orbit. See Grant et al., Abstract, Lines 1-3.

In U.S. Patent No. 4,809,935, Draim discloses a satellite system with a minimum number of satellites, including a three-satellite elliptic orbit constellation covering the entire Northern or Southern hemisphere and a four satellite constellation giving continuous global coverage.

In U.S. Patent No. 3,340,531, Kefalas et al. describe a satellite communication system in which a plurality of transportable ground terminals positioned on the Earth's surface are inter-linked by a plurality of satellites orbiting about the earth. The system utilizes a linear phased array receive and transmit antenna network for providing receive and transmit patterns which can be scanned and tracked over the complete hemisphere.

Ward and Price, in their 1987 article entitled *The UoSAT-2 Digital Communications Experiment*, discuss the operation of a store-and-forward communications service from a satellite in low Earth orbit.

In the 1987 paper *Multiple Satellite Networks: Performance Evaluation via Simulation, by* Clare et al., the authors discuss a simulation of networks having satellites and Earth stations as intercommunicating nodes.

A global message communication network for low density traffic, employing satellites at low altitudes, is explored in the 1992 paper *A Global Message Network Employing Low Earth-Orbiting Satellites* by Kaniyil et al.

European Patent Application No. 0 317 974 reveals a satellite business communication system capable of monitoring a plurality of aperture terminals through a public communication network.

A demand-assignment communication system is disclosed in U.S. Patent No. 4,870,642, issued to Nohara et al.

In U.S. Patent No. 4,361,886, Gutleber discloses a satellite communication system that employs a Doppler cancelling loop.

None of the systems described above are capable of supplying a very low cost yet worldwide communications network that does not require expensive and complex terrestrial or geosynchronous satellite equipment.

The references cited above disclose telecommunication systems that include satellites deployed in polar. Equatorial or inclined low Earth orbits. The systems provide for transmitting a message between two low-power fixed or mobile terminals on the ground through a store-and-forward network. The store-and-forward relay method takes advantage of the geometry of a system which allows the satellites to fly over different parts of the globe frequently. These low Earth orbit systems do not provide access to a satellite one hundred per cent of the time. In the most populated areas of the globe, a user may have to wait for many minutes until a satellite flies into view.

It would be a significant commercial advantage for a system using the minimum number of low cost satellites to offers user located in the highly populated, higher latitudes virtually immediate access to a satellite. It would also be a commercial advantage, in some cases, to offer nearly instant communication of the user's message to certain destinations. The development of such a system would constitute a major technological advance and would satisfy a long felt need in the satellite and telecommunications industries.

EP-A-0562374 discloses a plurality of relay stations; a plurality of user terminals; a constellation of communication satellites operating in Low Earth orbits; said plurality of user terminals being distributed over the Earth; each of said plurality of satellites being capable of communicating with at least one of said plurality of relay stations and with at least one of said plurality of user terminals, and each satellite comprising a communications payload.

The Journal of the Astronautical Sciences, vol. 34, n.1, Jan-March 1986, pages 31-64, L. Rider: "Analytic Design of Satellite Constellations for Zonal Earth Coverage using Inclined Circular Orbits", discloses satellite constellations for various purposes including communication including a constellation of satellites equally spaced and operating on a plurality of low Earth orbital planes; each of said pairs of low Earth orbital planes including an inclined orbital plane and a conjugate inclined orbital plane, said inclined orbital plane and said conjugate inclined plane each having an ascending node and a descending node, and said ascending node of said inclined orbital plane being displaced by approximately 180 degrees right ascension from said ascending node of said conjugate inclined orbital plane.

### DISCLOSURE OF THE INVENTION

One of the embodiments of the present invention is a satellite system that includes forty-eight satellites equally deployed in four pairs of low Earth orbits. The orbits are inclined at 50 degrees to the Equator. The ascending node of one orbit of a pair of orbits, is displaced from the ascending node of its conjugate orbit by 180 degrees right ascension. The ascending node of one orbit therefore occurs at the same angle of right ascension as the descending node of the conjugate orbit. Ascending nodes of adjacent orbital planes are placed at 0, 45, 90, 135, 180, 225, 270 and 315 degrees right ascension. The interplane phase angle between any two adjacent orbital planes is 0 degrees. The interplane phase angle is the angle between two satellites in adjacent planes when one is at the Equator. Other orbital parameters are possible while still maintaining conjugate pairs of orbits having complementary ascending nodes. This constellation is not a member of the class of constellations with eight equally spaced planes. Those constellations have ascending nodes at 0 or 180, 22.5 or 202.5, 45 or 225, 67.5 or 247.5, 90 or 270, 112.5 or 292.5, 135 or 315 and 157.5 or 337.5 degrees right ascension. In no case is the ascending node of one plane the same as the descending node of another plane.

A user terminal located between 34 degrees and 54 degrees latitude, the most highly populated portion of the globe, has virtually continuous access to a satellite in this constellation. A preferred embodiment provides a system for transmitting a message between two terminals on the ground through a store-and-forward network. For certain user terminals located in the upper latitudes, communication may be virtually instantaneous.

The satellites are designed to operate in a circular low Earth orbit at an altitude of from 950 kilometers (km) or higher. They are also capable of speeding messages around the globe either by working in combination with relay stations on the ground, or by transferring message payloads across different orbits via the relay stations.

The systems disclosed below are unique in their ability to provide affordable worldwide service, resulting in a competitive advantage over other terrestrial and previous satellite-based service providers. The services are described below and are summarized in Table One.

The present invention is designed to supply affordable Non-Voice, Non-Geostationary Mobile Satellite Service (NVNG MSS) in several markets:
- TracSat™:: Tracking & monitoring for the transportation industry.
- SecurSat™:: Fixed site monitoring of industrial/utility locations, monitoring and tracking for misplaced or stolen assets.
- MailSat™:: Transmission of e-mail.
- PageSat™:: Two-way alphanumeric paging.
- EmerSat™:: Emergency services.
- Other Services:: Radio beacons, TV interactive response, office connectivity.

**Table One**

| **Services and Demand Segments** | | | |
|---|---|---|---|
| *Segment* | *Service* | *Message Type* | *Description* |
| Transportation | TracSat™, | Short, frequent status and location messages | Messaging and location for trucking, maritime and railroads |
| | SecurSat™ | | |
| Remote monitoring | Secursat™ | Short telemetry messages and status monitoring | Pipeline, environmental and agricultural monitoring |
| Industrial/utility | SecurSat™ | Short telemetry messages and status monitoring | Monitor plant facilities, utilities and meters in remote locations |
| Personal/business communications | MailSat™, | Alpha-numeric messages, short-medium length e-mail messages | Alpha-numeric paging, e-mail and mobile computing for frequent business travelers |
| | PageSat™ | | |
| Commercial/residential security | SecurSat™, | Short alarm notification messages | Stolen assets and security breaches; accident notification, etc. |
| | EmerSat™, | | |
| Radio beacon system | Other | Short, frequent status and location messages | Vessel tracking, environment monitoring, etc. |
| Interactive television data transmission | Other | Alpha-numeric messages | Viewer response to TV, *e.g*., ordering |
| Commercial/personal access to business/information networks | Other | Business data, Faxes, computer files, etc. | Relay service for customer using non-licensed, personal communications wireless inside shielded structure |

An appreciation of other aims and objectives of the present invention and a more complete and comprehensive understanding of this invention may be achieved by studying the following description of preferred and alternative embodiments and by referring to the accompanying drawings.

### A BRIEF DESCRIPTION OF THE DRAWINGS

Figure 1 is a schematic view of a constellation of forty-eight satellites in four pairs of inclined orbits. For the sake of clarity, only two pairs of orbits are shown.
Figure 2 is a diagram showing typical satellite backs on a Mercator projection of the Earth's surface for eight orbital planes, six satellites per plane at 50 degrees inclination.
Figure 3 is a schematic view of one of the embodiments of the satellites used to implement the present invention.
Figure 4 depicts a typical relay station showing the fifteen degree elevation angle required by the invention.
Figure 5 is a diagram of one pair of orbital plates inclined at fifty degrees to the Equator, illustrating a typical orbital altitude of 950 km, a satellite leaving the ascending node of one orbital plane and a satellite leaving the descending node of the conjugate orbital plane.
Figure 6 is a plot of satellite visibility (percent of time) versus latitude, at 15 degree elevation angle, for three combinations of satellites and orbital planes including the combination of eight orbital planes and six satellites per plane (8x6) used in one embodiment of the invention.
Figure 7 reveals a plot of average downlink capacity (kbits/second) versus latitude, at 15 degree elevation angle, for three combinations of satellites and orbital planes including the combination of eight orbital planes and six satellites per plane (8x6) used in one embodiment of the invention.
Figure 8 shows a plot of "outage" (unavailable) time versus latitude, at 15 degree elevation angle, for three combinations of satellites and orbital planes including the combination of eight orbital planes and six satellites per plane (8x6) used in one embodiment of the invention.
Figure 9 is a diagram of a satellite communicating with relay stations and user terminals by means of uplink and downlink transmissions.
Figure 10 is a diagram showing various methods of relaying messages and data between relay stations.
Figure 11 depicts the frequencies and bandwidth used in uplink and downlink transmissions between a satellite, a relay station and a user terminal.
Figure 12 is a diagram of the structure of a data packet.
Figure 13 is a functional block diagram of the satellite subsystems and their interconnections.
Figure 14 depicts a functional block diagram of the message or "communications payload".
Figure 15 shows the satellite antenna gain pattern.
Figure 16 is a block diagram of one embodiment of radio frequency (RF) to intermediate frequency (IF) conversion used in the digital band scanning receiver to find rapidly any unoccupied frequencies which can be used for satellite, relay station and user terminal communications.
Figure 17 is a block diagram of another embodiment of RF to IF conversion used in the digital band scanning receiver.
Figure 18 is a diagram showing possible combinations of the modem module with other modules in a user terminal.
Figure 19 is a block diagram of the modem module.
Figure 20 is a diagram of the gain pattern of a typical user terminal antenna.
Figure 21 is a functional block diagram of a relay station.
Figure 22 shows schematically a radio beacon system for monitoring sea environment and tracking data with deployed buoys transmitting data through the satellite constellation-to-ground terminal links of this invention.
Figure 23 is a schematic depiction of an interactive television system using a return link from a viewer to a TV broadcaster through the satellite constellation of this invention.
Figure 24 depicts the return link from a viewer of a satellite TV broadcast through the satellite constellation-to-ground terminal links of this invention and terrestrial based data networks.
Figure 25 is a schematic diagram showing a method of providing connectivity to movable devices or devices with low rate data inside a building which shields the user's radio signal from the satellite.

### BEST MODE FOR CARRYING OUT THE INVENTION

### A Constellation of Satellites

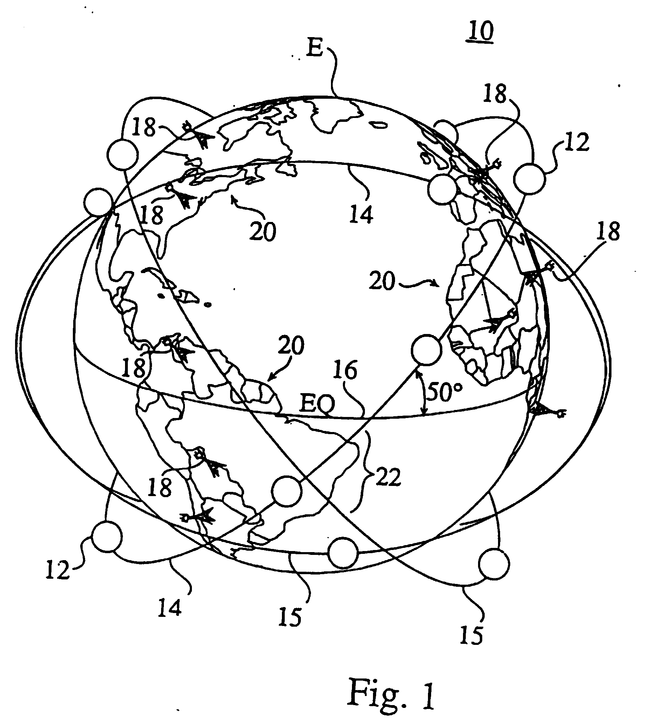

Figure 1 is a schematic view of a constellation 10 of forty-eight satellites 12 operating in four conjugate pairs of orbits 22 utilized in a preferred embodiment of the present invention. For the sake of clarity, only two conjugate pairs of orbits 22 are shown in Figure 1. In the text that follows, the term "constellation" refers to the entire group of satellites 12. A complete implementation of the invention which incorporates the constellation 10 as well as equipment such as relay stations or user terminals on or near the Earth's surface is described by the terms "system" or "network".

The satellites 12 shown in Figure 1 operate in a circular orbit 14, 15 about the Earth E which is inclined at 50 degrees to the Earth's Equator 16. In the most preferred embodiment, the satellites 12 are equally spaced in orbits 14, 15 at an altitude of 950 km which provides the best compromise between system coverage for users and costs. The pairs of orbits 22 are positioned so that the ascending node of one orbit 14 is displaced approximately 180 degrees in right ascension (longitude) from the ascending node of the conjugate orbit 15. The ascending node is the point in an orbit where a satellite crosses the plane of the Earth's Equator EQ travelling northward. The descending node is the point in an orbit where a satellite crosses the plane of the Earth's Equator EQ travelling southward. Ascending nodes of adjacent orbital planes are placed at approximately 0, 45, 90, 135, 180, 225, 270 and 315 degrees right ascension. The interplane phase angle between any two adjacent orbital planes in the most preferred embodiment is zero degrees. The interplane phase angle is the angle between two satellites 12 in adjacent planes when one satellite 12 is at the Equator 16. The interplane phase angle between satellites 12 in adjacent orbits may be between 0 degrees and 360 degrees, preferably between zero and 45 degrees, the most preferred embodiment being 7.5 degrees. The phase angle may be different between adjacent orbit planes.

The parameters given above are for one preferred embodiment of the invention. However, other orbital parameters are possible while still maintaining conjugate pairs of orbits 22 having complementary ascending nodes. For example, the altitude of the satellites 12 may be other than 950 km and may be between 100 km and 12,000 km. A preferred range is between 100 km and 1,200 km, which is substantially less than geostationary altitude. The altitudes of satellites 12 in differing orbits may be different. The orbit planes 14, 15 may be inclined to the Earth's Equator EQ between 0 and 180 degrees. A preferred range lies between 40 degrees and 80 degrees. In the most preferred embodiment, the orbit planes are inclined at 50 degrees, which provides ideal system coverage for the most densely populated areas of the Earth. The inclination of a plane may differ from other planes. Further, the number of satellites per orbital plane 14, 15 may be a positive integer, and the total number of satellites 12 is given by the number of orbital planes 14, 15 multiplied by the number of satellites per plane. There may be between two and twelve satellites 12 per orbit 14, 15, preferably between five and eight, with the most preferred embodiment having six satellites per orbit 14, 15. The latter number of satellites 12 provides the best compromise between system efficiency and cost. A constellation 10 may be created in which the number of orbital planes (N) is an even, positive integer and the ascending nodes of the planes are positioned at right ascension angles of 0, 180, 360/N, 360/N+180...k*360/N, k*360/N+180...(N/2-1)*360/N, (N/2-1)*360/N+180 degrees. There may be between two and twelve orbital planes 14, 15. A preferred range is between four and ten. The most preferred embodiment has eight orbital planes 14, 15 which provides the best satellite visibility from the Earth's northern latitudes. Additionally, orbits may be other than circular, *i.e*., elliptical or elliptical with varying foci.

While a variety of numbers of orbits 14, 15 and satellites 12 may be employed to implement the present invention, the reader should understand that the invention embraces any configuration that does not utilize geo-stationary spacecraft flying in orbits at an altitude of approximately 23,000 miles, except for using geo-stationary spacecraft as a communications link.

The constellation 10 which is part of this invention is not a member of the class of constellations with eight equally spaced planes. Those constellations have ascending nodes at right ascensions of 0 or 180, 22.5 or 202.5, 45 or 225, 67.5 or 247.5, 90 or 270, 112.5 or 292.5, 135 or 315 and 157.5 or 337.5 degrees. In none of these cases is the ascending node of one plane the same as the descending node of another plane. In fact, the combination of ascending and descending nodes are equally spaced around the Equator 16.

Figure 1 exhibits relay stations 18 located on the ground and distributed internationally in a pattern of locations on the Earth which maximize coverage and minimize time to forward messages and data between any two user terminals. A preferred embodiment of the present invention employs approximately ten to one hundred "distributed" relay stations 18. The relay stations 18 are capable of communicating with the satellites 12 in orbit via uplinks and downlinks. The relay stations 18 may be connected to terrestrial based networks such as public telephone networks.

User terminals 20 are randomly distributed over the Earth's surface and are also capable of communicating with the satellites 12. The user terminals 20 may be fixed, mobile or portable. They may be located on land, at sea or in the air.

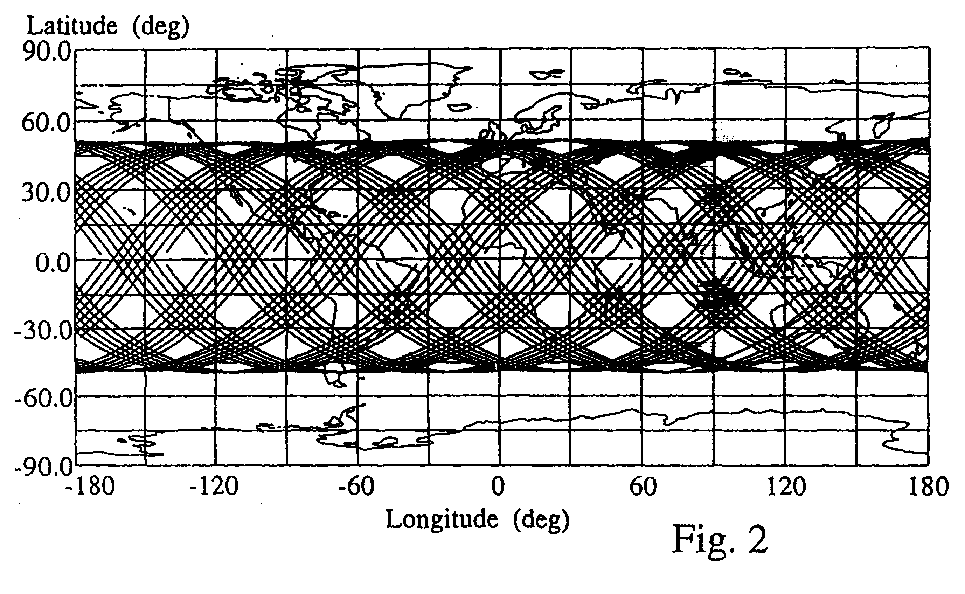

Figure 2 presents a diagram showing typical satellite tracks on a Mercator projection of the Earth's surface for eight orbital planes, six satellites per plane at 50 degrees inclination. The ground tracks indicate that the satellites pass over most of the settled globe frequently. A user terminal located between 34 degrees and 54 degrees latitude, the most highly populated portion of the globe, has virtually continuous access to a satellite in this constellation 10. This feature is discussed further below. A preferred embodiment provides a system for transmitting a message between two terminals on the ground through a store-and-forward network. For certain user terminals located in the upper latitudes, communication may be virtually instantaneous.

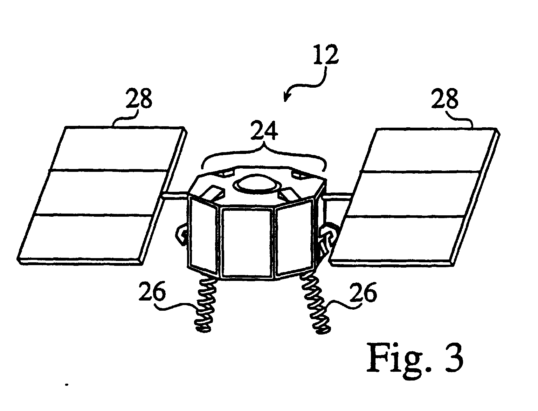

Figure 3 is a schematic depiction of a satellite 12 that may be employed in one of the embodiments of the invention. This satellite 12 comprises a body 24, solar panels 28 and a pair of helical antennas 26.

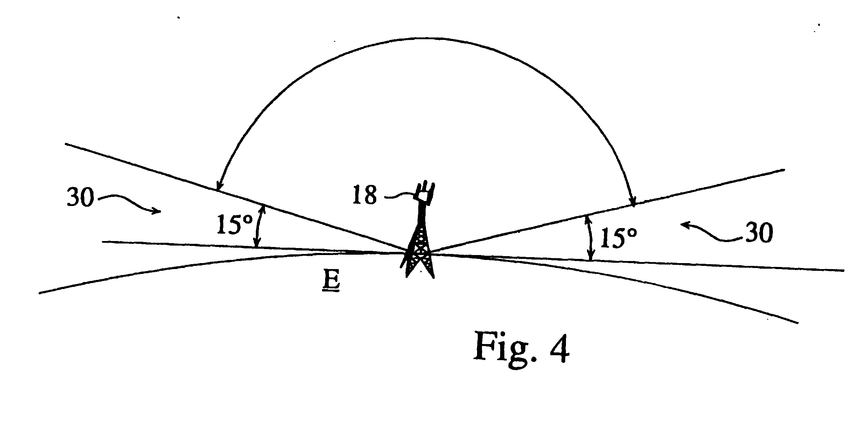

Figure 4 illustrates the elevation angle 30 of approximately 15 degrees which is required for reliable operation of the present invention. The elevation angle 30 is the angle measured from the local horizon at a terrestrial terminal such as a relay station 18 up to the region of the sky where the relay station 18 will be capable of communicating with one of the satellites 12 in the constellation 10.

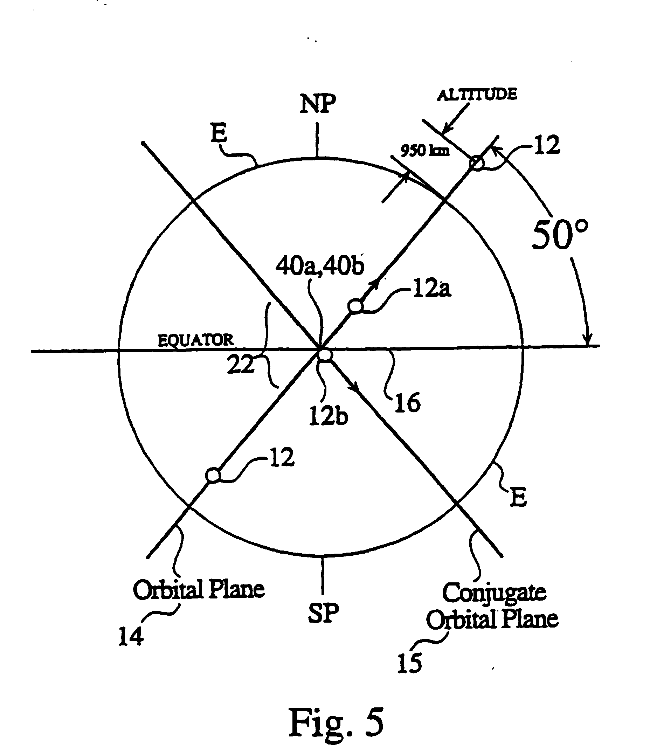

Figure 5 is a diagram of one pair of orbital planes 22 inclined at 50 degrees to the Equator. It shows a satellite 12a leaving the ascending node 40a of one orbital plane 14 and a satellite 12b leaving the descending node 40b of the conjugate orbital plane 15. In this embodiment, six equally spaced satellites 12 are placed in each circular, orbital plane 14, 15 at an altitude of 950 km. In this embodiment there is no overlap of the satellite 12 radio beam footprints between satellites 12 in the 50 degree inclined orbits. When used in conjunction with satellites 12 in an Equatorial orbit, ground control of frequency assignments will prevent interference between satellites in these orbits and satellites in Equatorial orbit.

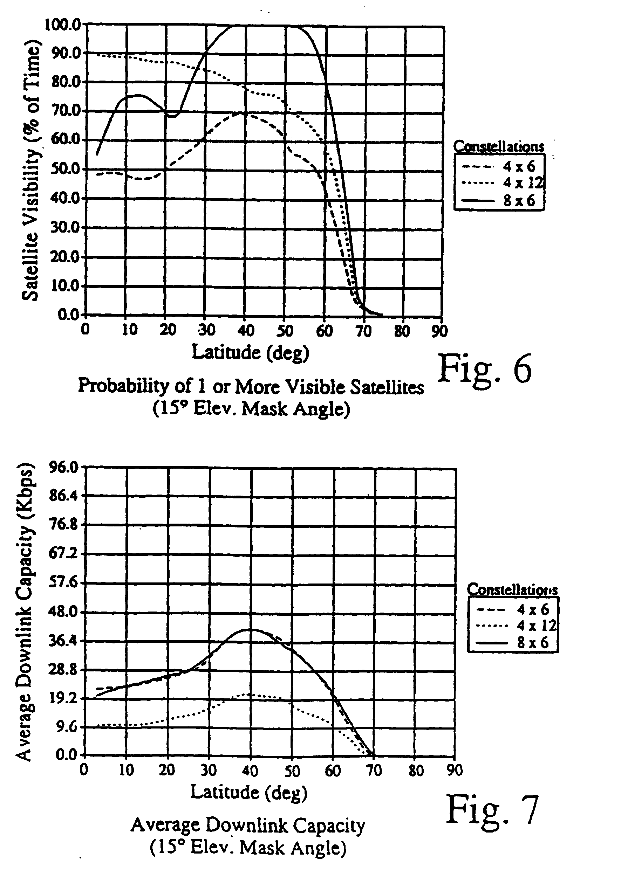

Figure 6 shows plots of satellite visibility (percent of time) versus latitude, at 15 degrees elevation mask angle, for three combinations of satellites 12 and orbital planes 14, 15. The combination of four pairs of eight orbital planes 22 and six satellites 12 per plane (8x6) are used in one embodiment of the invention. Other combinations shown are four orbital planes with six satellites 12 in each plane (4x6) and four orbital planes with twelve satellites in each (4x12). The combination of four pairs of eight orbital planes 22 and six satellites 12 per plane (8x6) used in one embodiment of the invention presents 99 percent visibility for a terminal 18, 20 at latitudes between 34 degrees and 54 degrees. In other words, the probability of one or more satellites 12 being visible above 15 degrees elevation angle in these latitudes is greater than 99 percent. The 8x6 constellation 10 provides better visibility above 27 degrees latitude than the other combinations. This is of particular importance in the northern hemisphere since these latitudes encompass all of continental Europe, Hawaii, Japan, the continental United States, China, and European Russia.

Figure 7 depicts the average downlink capacity in kilobits per second (KBPS) versus latitude, at 15 degrees elevation mask angle, for the three combinations of satellites 12 and orbital planes 14, 15 as shown in Figure 6. The 8x6 constellation 10 used in one embodiment of this invention and a 4x12 constellation have peak avenge downlink capacity from about 32 degrees to 50 degrees latitude. The peak average downlink capacity is nearly twice that of a 4x6 constellation.

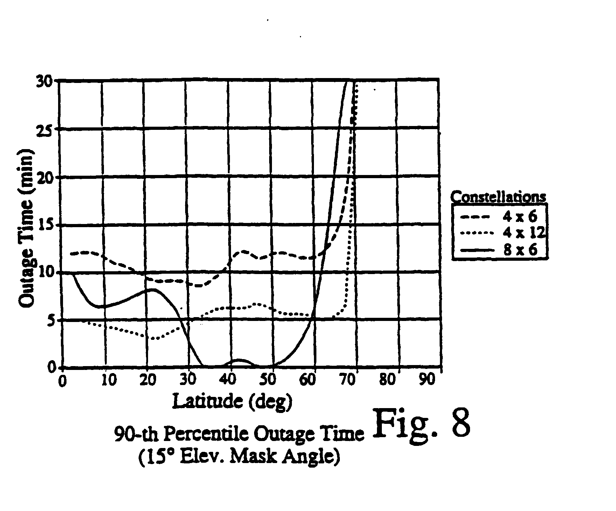

Figure 8 is a plot of 90th percentile "outage" time versus latitude, at 15 degrees elevation mask angle, for the three combinations of satellites 12 and orbital planes 14, 15 as shown in Figures 6 and 7. An embodiment of the current invention, an 8x6 constellation 10, offers a user significantly shorter "outage" times at latitudes between from 27 degrees to 58 degrees. The "outage" time represents the time a user must wait until a satellite 12 is in view. Between 34 and 54 degrees, a user has virtually instant access to one or more satellites 12. The maximum "outage" time is less than one minute for a user located between latitude 34 degrees and latitude 54 degrees. The fact that a user must wait for so little time to access a satellite 12 is of great commercial advantage. The invention can offer some users virtually instant communication to certain destinations at significantly lower cost than, for example a geostationary satellite system.

### Communications Links and Protocols

The present invention comprises a satellite system that will provide store-and-forward coverage of virtually all locations on the Earth's surface. The following discussion is based on one preferred embodiment (As shown in Figure 1) in which the constellation includes 48 satellites 12 in four conjugate pairs of orbital planes 22, the pairs being equally spaced around the Equator and inclined at 50 degrees. In this preferred embodiment, each orbital plane 14, 15 contains six equally spaced satellites 12 in a circular orbit at an altitude of 950 km. User terminals 20 are distributed randomly, primarily in portions of the Earth E which are inhabited. While the detailed information in respect of power requirements, surface footprints of each satellite's radio beams, and the like are specific with respect to this embodiment, it will be appreciated by those skilled in the art that the methods and apparatus described are equally applicable to other embodiments having different constellations or orbital planes.

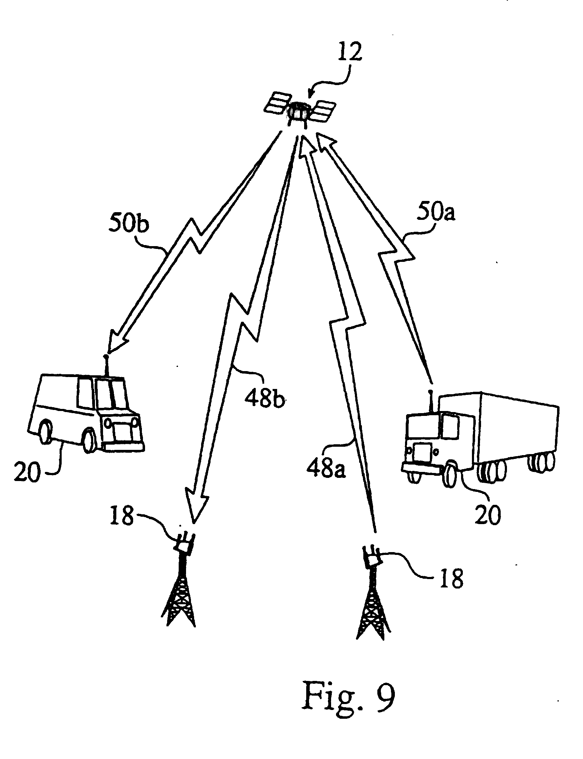

In Figure 9, a primary method of communication between subscribers operating user terminals 20 is shown. A subscriber communicates with a satellite 12 by means of a user terminal-satellite uplink (TSU) 50a. The satellite stores the message and forwards it at a later time to another subscriber by means of a user terminal-satellite downlink (TSD) 50b. To reduce the time for delivery, the satellite is able to send the message to a relay station 18 through a relay station-satellite downlink (RSD) 48b. The relay station 18 retransmits the message to a second satellite 12 in an orbit 14, 15 which will more quickly pass nearby to the addressee. The retransmission is through a relay station-satellite uplink (RSU) 48a. The second satellite 12 at a later time sends the message to the addressee through a user terminal-satellite downlink (TSD) 50b.

In Figure 9, relay station 18 is a message-forwarding terminal, since it holds a message from a subscriber obtained by means of a relay station-satellite downlink 48b transmission. The relay station 18 may hold this message until another satellite 12 in the constellation 10 comes within range or, depending on the destination, it may forward the message by one of the relay means described below.

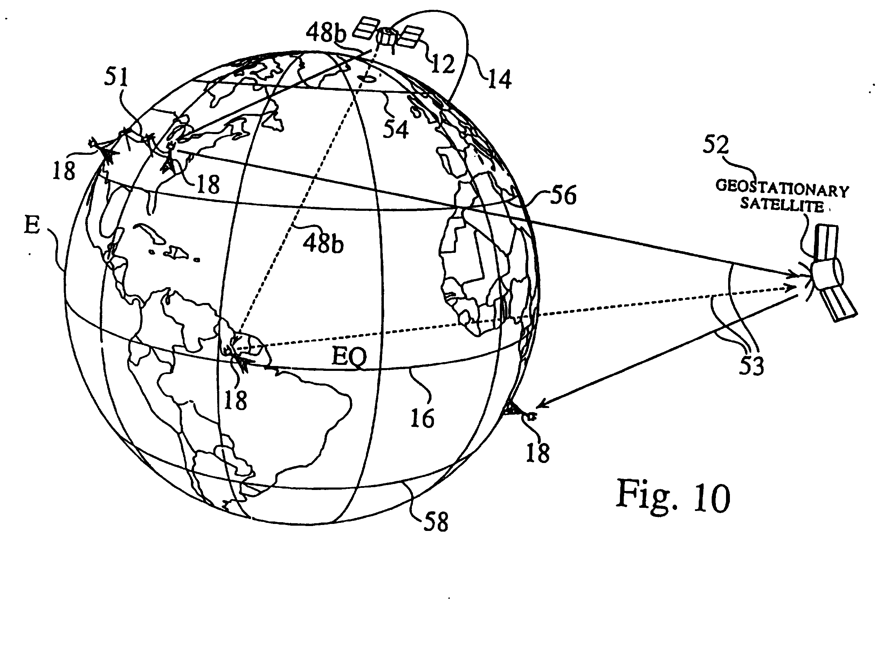

Figure 10 is a diagram which shows a satellite 12 communicating to relay stations 18 over relay-satellite downlinks (RSD) 48b, which in turn forward messages to their destinations through terrestrial links 51 or very small aperture terminal (VSAT) links 53 to geostationary satellites 52. Figure 10 reveals a satellite 12 in an inclined orbit 14, 15 using a combination of ground relay stations 18, terrestrial links 51, and a geostationary satellite 52 to relay data. Any combination of these may be employed to speed a message throughout a particular orbital plane 14, 15. This novel use of relay stations 18 and other links 51, 53, enables the system to accelerate the delivery of a message payload to its destination instead of waiting for the satellites 12 in the orbit plane 14, 15 to precess around the Earth E to its point of delivery.

In Figure 10, three lines of latitude are shown, indicated by reference characters 54, 56 and 58, on the surface of the Earth. These lines represent 60 degrees North, 30 degrees North and 30 degrees South latitude, respectively. In one embodiment of the invention, the region of the Earth's surface bounded by the lines of latitude 54 and 56 are within the service areas of the satellites 12 in inclined orbits 14, 15 and the region of the Earth's surface bounded by the lines of latitude 56 and 58 are within the service areas of satellites 12 in an Equatorial orbit. To reduce the time of delivery of message traffic even further, the distributed relay stations 18 may be linked together in several ways as depicted in Figure 10. In an alternative embodiment, relay stations 18 are linked through a geostationary communication satellite 52 by use of very small aperture terminals (VSAT's). In a variation of this embodiment, large low Earth orbit communications satellites may be used for these linkages in place of the much higher altitude geostationary satellites 52.

In still another alternative embodiment, relay stations 18 are linked through public, switched telephone networks 51, which are available in most of the developed world. For example if the message held at a relay station in New York is addressed to an addressee in California, the message may be forwarded by the public switched telephone network 51. To provide a great deal of system reliability, certain relay stations 18 can function as a message-forwarding station, or a network operation control center (NOCC).

The ability of a relay station 18 to select among alternative network means to forward messages enables the provision of an "auction protocol" for users. In its initial communication with a user, the satellite 12 "announces" the level of traffic it is currently accepting. The level of traffic is varied from, for example, level one, which is the fastest and most expensive mode of delivery, to the next fastest and less expensive mode of delivery, and so on until the slowest and least expensive level is reached. A user can, therefore, elect to send a message at the highest level of service, or wait for a cheaper lower level of service.

The satellite system will be distinguished by the range of services offered, the low cost of its service options relative to those offered by similar proposed service providers and its high spectral efficiency. The types of services provided by the present invention include tracking and monitoring for the transportation industry, monitoring of remote assets or site locations, such as vehicles, boats and vacation homes or remote utility equipment, e-mail, paging, emergency services and other services.

### Combined Constellation

An alternative embodiment of the invention combines satellites 12 in Equatorial, polar and inclined orbits. The present invention may utilize from six to fourteen satellites 12 in Equatorial orbit. The Equatorial relay stations 18 are used to store and forward traffic sent from satellites travelling in opposite directions in orbits 14, 15 inclined by 50 to 60 degrees. This method is similar to the method used by polar relay stations so store and forward traffic from satellites in more steeply inclined or polar orbits. Such an embodiment offers broad coverage and rapid transfer of messages everywhere on the Earth E.

### Communications Parameters

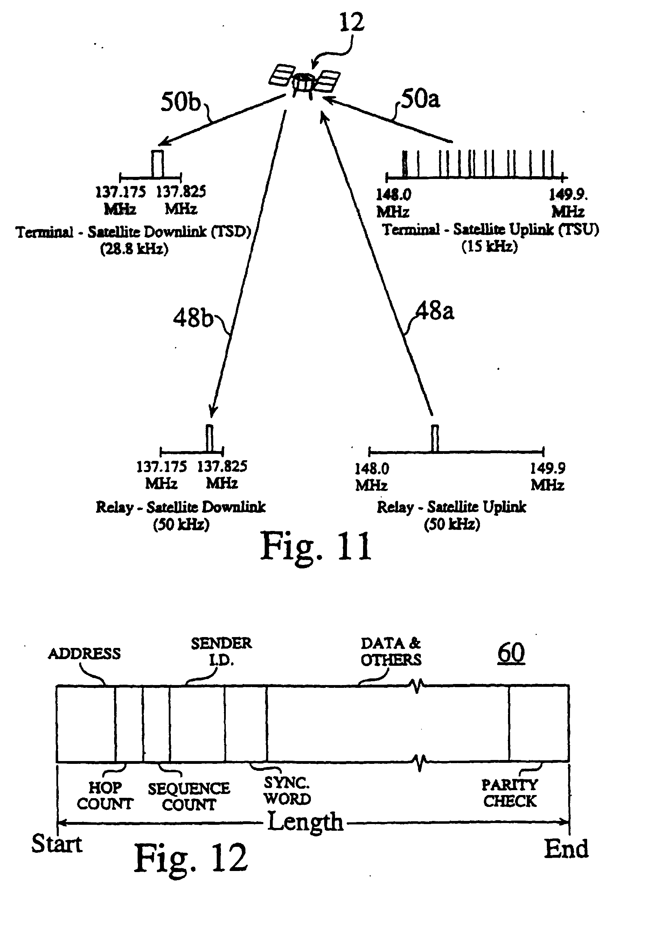

Figure 11 depicts the frequencies and bandwidth at which the satellite system will communicate messages. The TSUs and the RSUs will operate in the 148-149.9 MHz band and the TSD and RSD will operate in the 137.175-137.825 MHz band. All of the links will carry "packetized" digital data. Network packets will be used for resource request and assignment, and other network control functions. Monitoring packets will be used for monitoring applications. Text packets will be used for message applications. The text packet length will be selected to comply with footnote US323 to the Frequency Allocation Table, 47 C.F.R. §2.106. Footnote US323 requires that, in the 148-149.9 MHz band, single transmissions from individual Earth stations may not exceed 450 msec in duration (4160 bits/9.6 KBPS = 433.3 msec).

Frequency assignments for satellite downlinks 48b, 50b will be in four segments. For all satellites 12 in a given orbital plane 14, 15, the frequencies will be the same. Because of no overlap in the radio beam footprints of the six satellites 12 traveling in each fifty degree inclined orbit 14, 15, there is no interference between these satellites 12. Ground control of frequency assignments will prevent interference between satellites 12 in these orbits and satellites 12 in Equatorial orbit 14.

In this embodiment, since satellites 12 in sectors of orbits on the same side of the Earth E will be transmitting on the same frequencies without interference from other satellites 12, it is possible to reduce the bandwidth of the TSD downlink signal spectrum to one-fourth of that used in some other embodiments.

Each satellite 12 in this embodiment has six receive channels. Other embodiments may require up to fifteen receive channels. The method of channel assignment to the user terminal transmitters is discussed below in the Section entitled "Dynamic or Adaptive Channel Assignment".

### Telecommunication Frequencies and Spectrum

The present invention has been designed from the outset to make efficient use of the scarce spectrum available. Table Two below summarizes the total spectrum available in the U.S. for this type of service, resulting from the allocations made at WARC-92 and in the Commission's Order allocating spectrum for the NVNG Mobile Satellite System.

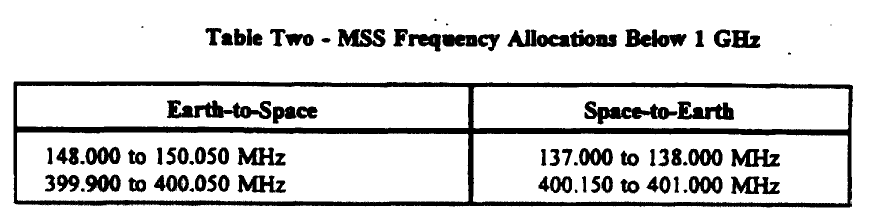

The table shows a total of 2.2 MHz available for the Earth-to-space links (uplink) and 1.85 MHz for the space-to-Earth links (downlink). However, parts of this available spectrum are only allocated on a secondary basis to the MSS service, and even the primary MSS allocations are allocated on a co-primary basis to other services, such as Fixed, Mobile, Meteorological-Satellite, Space Operation, Space Research and Meteorological Aids. The ability of the system to effectively and efficiently share the spectrum in this type of environment is therefore of paramount importance.

TSD and RSD transmitter filters protect the radio astronomy service in the 150.05-153 MHz and 406.1-410 MHz bands from harmful interference by limiting spurious emissions in those bands.

### Data Transmission

Figure 12 is a packet structure diagram 60 showing the information contained in certain fields. For example, the first field may contain the address of the recipient. The second field may contain the "hop" count or how many relays have occurred to the current time. The next field may contain the sequence count or frame number. The fourth field may contain the sender's identification, and so on. Table Three below describes the packet structures.

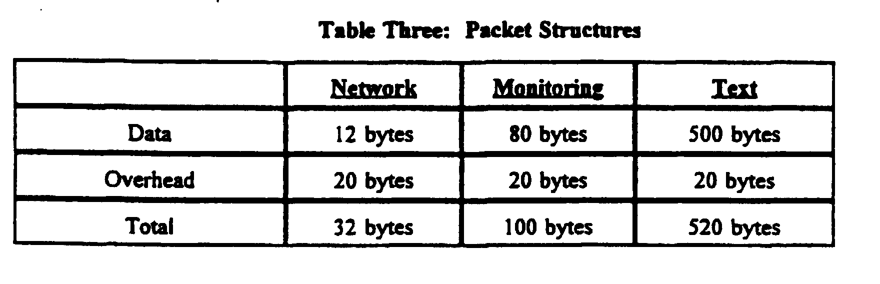

The user terminal-satellite link bit error rate objective is 10⁻⁶ and the relay station-satellite link bit error rate objective is 10⁻⁸. The packet overhead bits allow for synchronization, parity check, sequencing, status, and addressing and routing. Forward error correction coding is employed in the store-and-forward system. Raw data bits are mapped into symbols in a manner which results in each symbol containing information about multiple bits. Lost data bits can therefore be recovered.

Each satellite will support six TSUs 50a at a data transmission rate of 9.6 kilobits per second (KBPS), one TSD 50b at a data rate of 24 kbps, one RSU 48a at a data rate of 50 KBPS, and one RSD 48b at a data rate of 50 KBPS. Thus, the user terminals 20 may transmit at 9.6 KBPS and receive at 24 KBPS. The TSU bandwidth is 15 kilohertz (KHz) and the TSD bandwidth is 28.8 KHz. The relay stations 18 will transmit and receive at 50 kbps and have a bandwidth of 50 KHz.

While the nominal TSU transmission data rate is 9.6 KBPS, lower cost user terminals 20 are possible if lower data rates are used. Therefore, data rates as low as 300 BPS will be available. For example, a user terminal 20 might transmit at standard data rates of 9600, 4800, 2400, 1200, 600 or 300 BPS. Besides the low cost and availability of equipment capable of the lower transmission rates, battery power requirements are reduced substantially, which makes this method attractive for hand held or periodic reporting user terminals 20. For example, burst power for a 300 BPS signal is only about 20 milliwatts compared to about five watts for a 9.6 KBPS signal.

The present invention uses a combination of random access and frequency division multiplexing (FDM) for the TSUs 50a and time division multiplexing (TDM) for the other links. FDM is preferred for the TSUs 50a because it does not require high burst power transmissions from the user terminals 20 that would be required for a single wideband TDM channel. TDM is preferred for the other links because it allows for the use of efficient saturated power amplifiers in the satellites 12 and relay stations 18. Back-off is not required to control intermodulation levels since there will be only a single RF carrier in these links.

All of the links will use differentially encoded offset-quadraphase shift keying (OQPSK) modulation filtered for 50% excess bandwidth in combination with rate 7/8, constraint length 7, convolutional coding. This format has been selected because of its high combined modulation/coding efficiency of 1.17 bits/sec/Hz.

However, frequency shift keying (FSK) modulation is also used on a time- shared basis to support low-cost user terminals 212. A user terminal 212 can use an FSK demodulator absorbing only "trickle" power, *i.e*., low current, while waiting for a satellite signal to appear. An FSK signal can be sent at reduced data rate, for example KBPS, because of a smaller portion of spectrum occupied by an FSK modulated signal. A ground station looks for an ID code in the FSK mode. It can then, if desired, turn on the OQPSK keying demodulator and operate at a faster rate.

The downlink 48b, 50b signal is partitioned into 500 msec frames. Initially, signals are FSK modulated. Later signals in the 500 msec frame may be FSK or OQPSK modulated depending on the demand. The network operation control center (NOCC) varies the time-sharing between FSK and OQPSK modulation depending on traffic load.

The uplink (48a, 50a) signals are OQPSK modulated, although the use of FSK modulation and lower data rates offer some cost reduction.

The required channel bandwidths are a function of the data rate, the spectral efficiency of the modulation and coding, the user terminal or relay station and satellite frequency stability, the uncompensated Doppler shift and the channel filtering. The required channel bandwidths are summarized in Table Four.

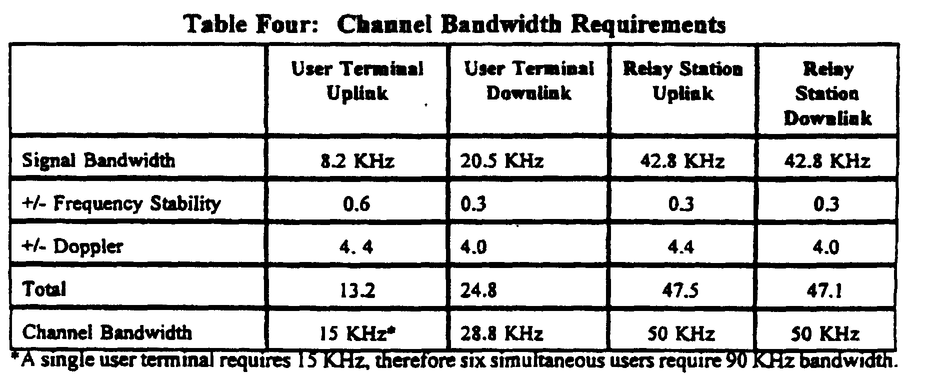

To implement an "auction" protocol, the satellite 12 indicates what level of traffic it is accepting within the 500 msec frame of the first burst of data. User terminals 20 wishing to send that level of traffic will do so. Terminals having lower levels of traffic will wait. The auction protocol sequentially lowers the level of traffic it is accepting until all users desiring the highest to the lowest level of service are accommodated.

### Enhanced Dynamic or Adaptive Channel Assignment

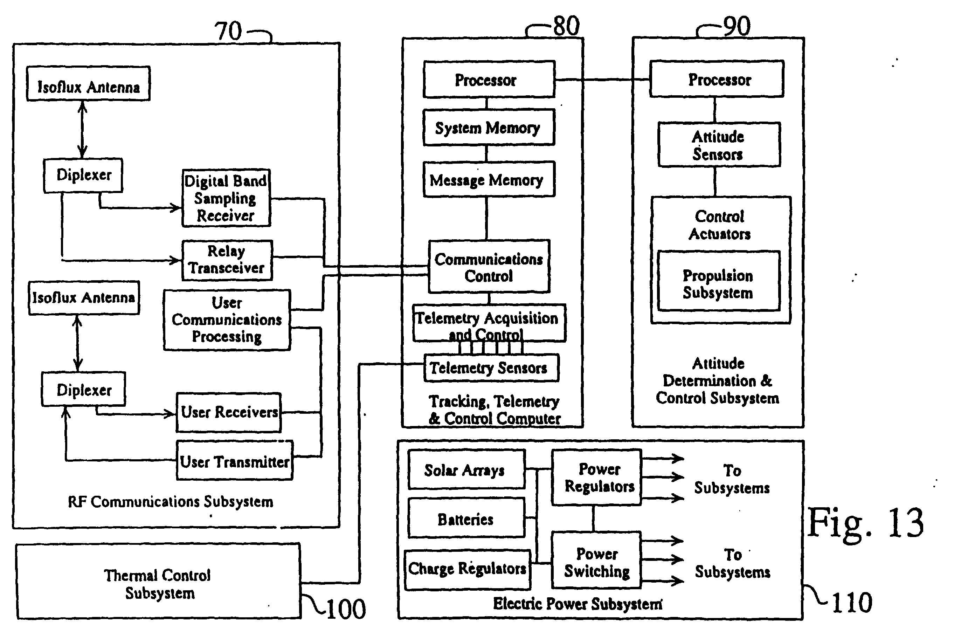

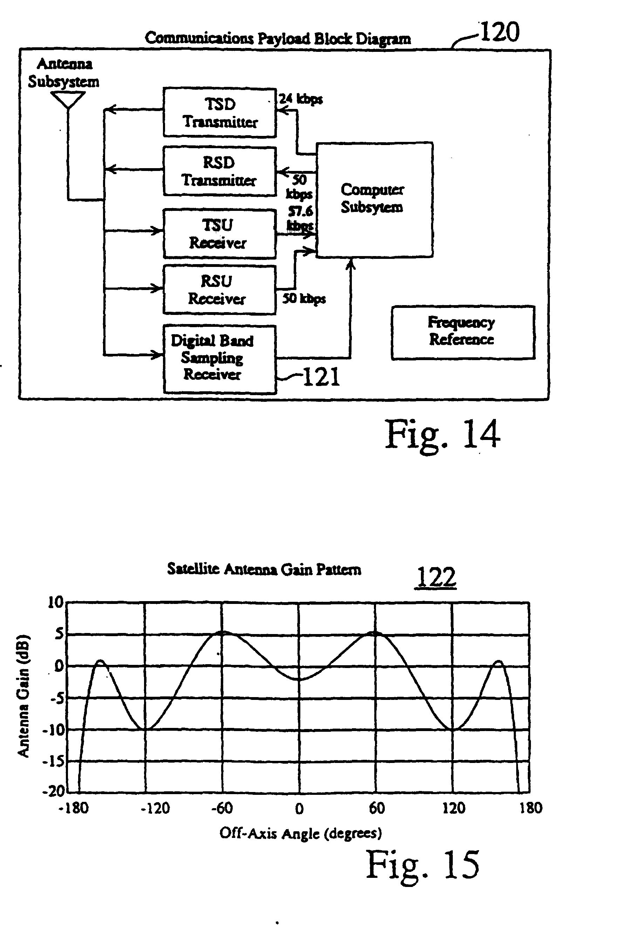

Figure 13 depicts a functional block diagram of the satellite subsystems. These subsystems include an RF communications subsystem 70, a tracking, telemetry and control computer 80, an altitude determination and control subsystem 90, thermal control subsystem 100 and electric power subsystem 110. The communications payload 120 which includes the RF communications subsystem 70, a computer subsystem and a frequency reference, is shown in block diagram in Figure 14. The communications payload 120 includes a digital band-sampling receiver (DBSR) 121. The DBSR 121 monitors the pool of frequencies in the 148.0 to 149.9 MHz uplink band and assigns channels to user terminals 20 as available. The DBSR replaces an earlier, much slower band scanning receiver which scanned the entire band each 0.5 second and projected by algorithm the expected clear frequencies based on the 0.5 second history. The operation of the scanning features of the DBSR is discussed in greater detail below.

### Communications Payload Description

A functional block diagram of the communications payload 120 is shown in Figure 14. The antenna subsystem converts the free space propagated waveforms into RF signals for processing by the user terminal-satellite uplink (TSU) receiver, the relay station-satellite uplink (RSU) receiver, and the band sampling receiver 121. It also converts the RF signals from the user terminal-satellite downlink (TSD) transmitter and the relay station-satellite downlink (RSD) transmitter into free space propagated waveforms. Two transmitting antennas are used, one for the TSD links and the other for the RSD links. This will eliminate the combining loss that would occur if the TSD and RSD signals were radiated from the same antenna.

The spacecraft antennas will be shaped to partially compensate for the changing free space propagation loss due to the range variation that occurs between the time the satellite appears at the lowest elevation angle and the time it is directly overhead. This maximum variation in path loss corresponds to about 7.5 dB in propagation loss. As a result, the preliminary spacecraft antenna design has a gain of -2 dBi in the nadir direction and +5.5 dBi at a 15 degree grazing angle. The satellite antenna gain pattern 122 is shown in Figure 15. The satellite antennas will be left-hand circular polarized, though right-hand polarization is also possible.

The TSU receiver will downconvert, demodulate, and decode the uplink signals 50a received from the transceivers. The TSU receiver will provide the demodulated packets to the computer subsystem at 57.6 kbps for processing. The RSU receiver will perform the same functions for the RSU channel.

The TSD transmitter will accept packetized data from the computer subsystem at 24 KBPS, encode and modulate the data, upconvert it to the transmit channel frequency, and provide 20 watts of transmit power using a solid-state power amplifier (SSPA). The RSD transmitter will perform the same functions for the 50 KBPS RSD data using a 2.5 W SSPA.

The frequency reference subsystem will provide stable frequency and time signals to the other functions. The computer subsystem will process all of the received packets, store them in memory, and retransmit them as required. It will also will use the data from the band scanning receiver to make TSU channel assignments.

Key communications payload 120 parameters are shown in Table Five.

**Table Five**

| **Key Satellite Communications Payload Parameters** Antenna | |
|---|---|
| Nadir Gain | -2 dBi |
| Edge of Coverage Gain | 5.5 dBi |
| Edge of Coverage Beamwidth | 111 degrees |
| Polarization | LHC |

| TSD Transmitter | |
|---|---|
| Frequency Band | 137.175-137.825 MHz |
| Number of Channels | 1 |
| Transmit Power | 20 W |
| 99% Power Channel Bandwidth | 20.5 KHz |
| Data Rate | 24 KBPS |

| RSD Transmitter | |
|---|---|
| Frequency Band | 137.175-137.825 MHz |
| Number of Channels | 1 |
| Transmit Power | 2.5 W |
| 99% Power Channel Bandwidth | 42.8 KHz |
| Data Rate | 50 KBPS |

| TSU Receiver | |
|---|---|
| Frequency Band | 148-149.9 MHz |
| Number of Channels | 6 |
| Channel Bandwidth | 15 KHz |
| Per Channel Data Rate | 9.6 KBPS to 300 BPS, variable |
| Noise Figure | 4 dB |

| RSU Receiver | |
|---|---|
| Frequency Band | 148-149.9 MHz |
| Number of Channels | 1 |
| Channel Bandwidth | 50 KHz |
| Per Channel Data Rate | 50 KBPS |
| Noise Figure | 4 dB |

| Band Scanning Receiver | |
|---|---|
| Frequency Band | 148-149.9 MHz |
| Number of Channels | 1 |
| Channel Bandwidth | 15 KHz |
| Noise Figure | 4 dB |

| Frequency Reference | |
|---|---|
| Frequency Stability | 0.1 PPM over environment and time |

| Computer | |
|---|---|
| Memory | 16 Mbytes |

### Digital Band-Sampling Receiver

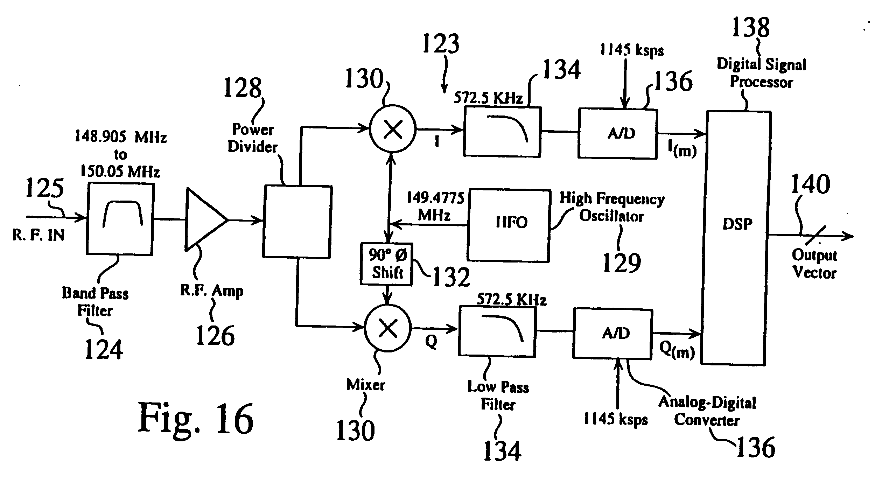

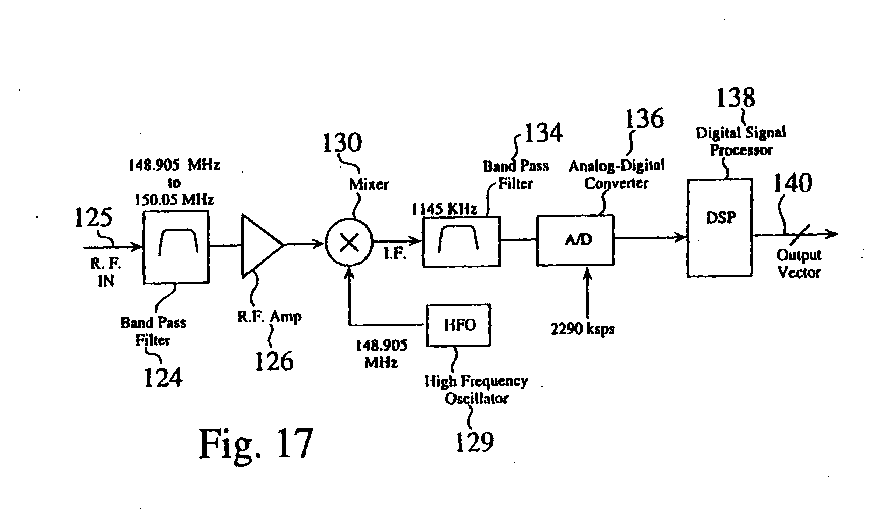

The digital band-sampling receiver 121 (DBSR) contained in the RF communications section 70, communications payload 120 of the satellite 12, is a digital spectrum analyzer. Two embodiments of the DBSR band sampling process are depicted in Figures 16 and 17. The input signal 125 to the DBSR is the 148.905 to 150.05 MHz, terminal-satellite uplink signal 50a from the satellite antenna subsystem. The output signal vector 140 from the DBSR 121 is derived from 458 average power estimates corresponding to 458, 2.5 KHz segments of the input band. The DBSR generates the output vector 140 once each 0.5 seconds. The vectors are used to identify free channels that can be assigned to user terminals 20.

Figure 16 is a block diagram of a baseband sampling embodiment 123. In this embodiment, the input signal 125 is limited by a bandpass filter 124 to reduce out-of-band interference and low-noise amplified in an RF amplifier 126 to set the system noise floor. The amplified signal is equally divided in a power divider 128. The two power divider 128 outputs are down-converted to baseband signals I, Q. One power divider output is converted in a mixer 130 by an in-phase local, high frequency oscillator (HFO) 129 running at 149.4775 MHz to baseband signal I. The other power divider output is converted by the same HFO phase-shifted by 90 degrees in a phase shifter 132, in a second mixer 130 producing a second baseband signal Q. Each baseband signal I, Q is filtered by a low pass filter 134 having a band width of 572.5 KHz to prevent aliasing. Each baseband signal I, Q is sampled in an analog-to-digital (A/D) converter 136 at a rate of 1145 kilosamples per second (KSPS). Digital signal samples I(n) are output from one A/D converter 136 and digital signal samples Q(n) are output from a second A/D converter 136. The I(n) and Q(n) digital signal samples are processed by a digital signal processor (DSP) 138 which generates the output signal vector 140.

A second embodiment of the DBSR band sampling process is displayed in Figure 17. In this embodiment, the input signal 125 is filtered in a bandpass filter 124, and amplified in an RF amplifier 126 as in the first embodiment 123 described above. In this embodiment, the amplified signal is down-converted in a mixer 130 to a convenient intermediate frequency (IF), selected to prevent aliasing, by an HFO 129. The HFO 129 in this case operates at 148.905 MHz. The IF signal is bandpass-filtered in a second bandpass filter 134 having a bandwidth of 1145 KHz to prevent aliasing. The IF signal is then sampled in an A/D converter 136 at 2290 KSPS. The samples are processed by a DSP 138 which generates the output signal vector 140.

At least two implementations of the digital signal processor (DSP) 138 can be used. The first implementation is a digital filter bank which has 458 digital filters. The digital filters select 458 band segments, each segment 2.5 KHz wide. The computation required in this implementation is prohibitive. Therefore, a second implementation is preferred. A Fast Fourier Transform (FFT) technique is used in which 458-point Fast Fourier Transforms are run and the 1250 output vectors are averaged over each 0.5 second interval. The output vectors 140 are used by the computer subsystem to assign frequencies to the user terminals 20 and relay terminals 18.

### User Terminals

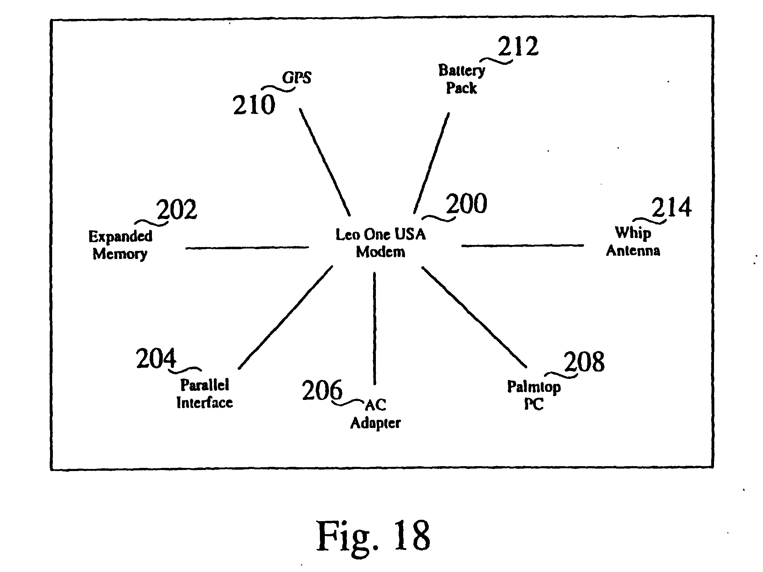

The present invention will provide a family of low-cost user terminals 20 or transceivers to support a variety of different applications. As illustrated by Figure 18, the heart of these transceivers is the modem module 200. The modem 200 will be small, less than ten cubic inches, and capable of battery operation. It will be available in pocket-sized, desktop, and vehicle mounted transceiver configurations. Table Six provides examples of how these modules might be combined for different applications. Other combinations are possible.

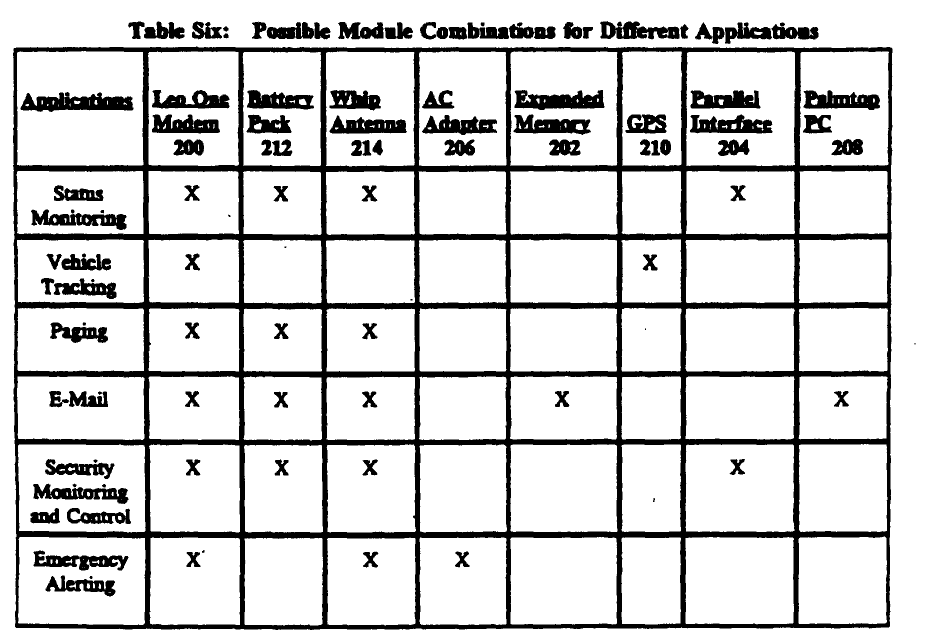

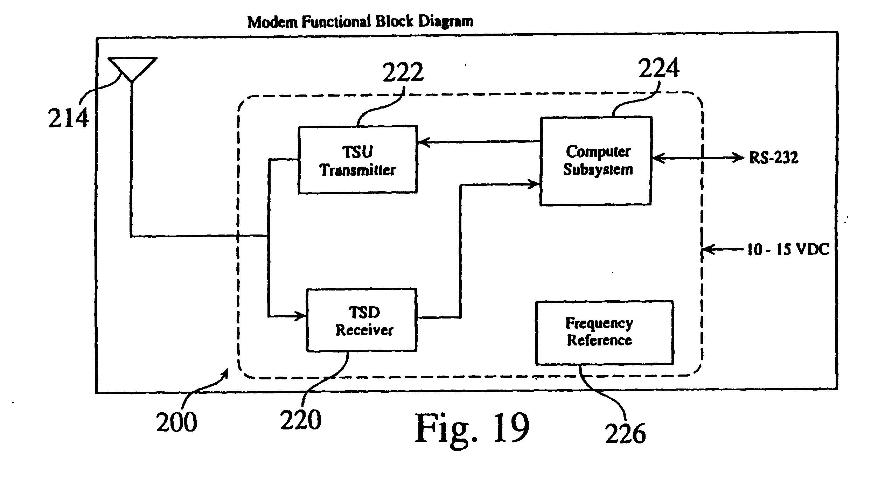

Application-specific transceiver configurations will be constructed by combining the modem module 200 with other modules in Figure 18. A schematic illustration of the modem module 200 is provided in Figure 19. Prices for a basic transceiver are expected to be under SUS 500.

### User Terminal Technical Parameters

A functional block diagram of the modem 200 is shown in Figure 19. The modem 200 will interface directly with an antenna 214. In most applications, the standard antenna 214 will be a normal-mode helix similar to those used with conventional hand-held VHF transceivers. In vehicle mounted applications, the standard vehicle FM radio antenna or an enhanced replacement will be used. The TSD receiver 220 will downconvert, demodulate, and decode the 24 KBPS satellite downlink channel. The TSU transmitter 222 will accept packetized data from the computer subsystem 224 at rates variable from 9.6 KBPS to 300 BPS, encode and modulate the data, upconvert it to the transmit channel frequency, and provide about 5 W of transmit power. The frequency reference subsystem 226 will provide stable frequency and time signals to the other functions. The computer subsystem 224 will process the received packets and make the data available to the other modules or directly to the subscriber via an RS-232 port. The computer will receive data to be packetized and uplinked from other modules or directly from the subscriber via a RS-232 port.

The user terminal key technical parameters are summarized in Table Seven. User terminals 20 are to be incapable of radiating in the 108-137 MHz bands.

**Table Seven**

| **Key User Terminal Parameters** Antenna | |
|---|---|
| Pattern | Non-Directional |
| Polarization | Vertical |

| Transmitter | |
|---|---|
| Frequency Band | 148-149.9 MHz |
| Channel Bandwidth | 15 KHz |
| Number of Active Channels | 1 |
| Doppler Pre-Compensation | ±2.2 KHz |
| Transmit Power | 5 W |
| Burst Duration | 450 msec |
| Burst Spacing | 15 seconds |
| Duty Cycle | 9 seconds every 15 minutes |
| 99% Power Bandwidth | 8.2 KHz |
| Modulation | OQPSK |
| Coder | Convolutional r = 7/8, K = 7 |
| Data Rate | 9.6 KBPS to 300 KBPS |

| Receiver | |
|---|---|
| Frequency Band | 137.175-137.825 MHz |
| Channel Bandwidth | 28.8 KHz |
| Number of Active Channels | 1 |
| Doppler Pull-In Range | ±2.0 KHz |
| Demodulation | OQPSK & FSK |
| Decoder | Soft Decision Viterbi r = 7/8, K = 7 |
| Data Rate | 24 KBPS |
| Noise Figure | 4 dB |
| Implementation Loss | 2 dB |

| Frequency Reference | |
|---|---|
| Frequency Stability | 1.0 PPM over environment and time |

### User Terminal Antenna Gain Patterns

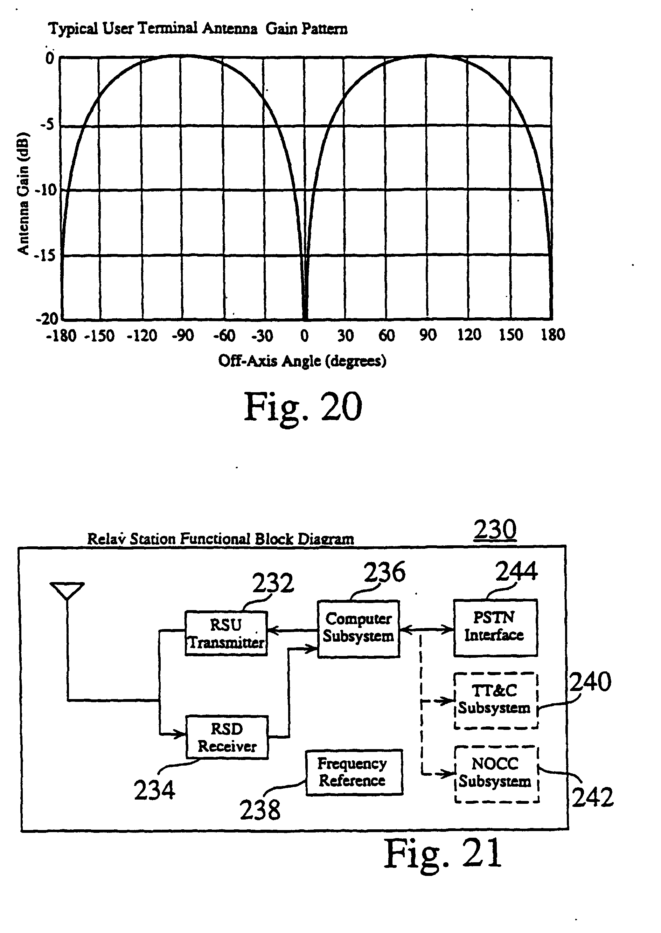

A typical user terminal 20 antenna gain pattern is shown in Figure 20.

### Relay Station Technical Parameters and Operation

A relay station 18 functional block diagram 230 is shown in Figure 21. The RSD receiver 234 will downconvert, demodulate, and decode the 50 KBPS relay-satellite downlink 48b channel and provide the demodulated packets to the computer subsystem for subsequent processing. The RSU transmitter 232 will accept packetized data from the computer subsystem 236 at 50 KBPS, encode and modulate the data, upconvert it to the transmit channel frequency, and provide 1.8 W of transmit power.

The frequency reference subsystem 238 will provide stable frequency and time signals for the other functions. The computer subsystem 236 will perform the packet and network overhead functions including packet routing and billing. It will control the open loop pointing of the relay station antenna to acquire and follow the satellites 12. In addition, it will process Doppler frequency measurements of the satellite signals to refine their orbital estimates.

The Telemetry Tracking & Control (TT&C) subsystem 240 will decode and process the telemetry data packets from the satellites 12 and generate and encode command packets for transmission to the satellites. All of the TT&C data will be encrypted to prevent unauthorized control of the satellites.

The Network Operation & Control Center (NOCC) subsystem 242 will allow for control of the constellation. The NOCC functions will include resolving overlap conflicts by commanding one of the overlapping satellites to cease operation during the overlap and monitoring constellation traffic levels.

The relay stations 18 will poll the satellites 12 to initiate data transfer. The relay stations 18 will predict when each satellite will appear above the minimum elevation mask angle and use open loop pointing of the relay station antenna to acquire and follow the satellite 12. The relay stations 18 will estimate the satellite signal Doppler shift to minimize acquisition time. The relay stations 18 will use Doppler frequency measurements of the satellite signals to refine their orbital estimates.

The relay station-satellite uplink (RSU) and relay station-satellite downlink (RSD) signals are partitioned into 500 msec frames. Each frame will be divided into two time slots. The first time slot will be reserved for network control (Network packets). The remaining time slot will allow for the transfer of Text packets. Monitoring packets, or some combination. All packet exchanges will be acknowledged by the recipient using Network packets. The relay station 18 and the satellite 12 will send at least one Network packet in the network control time slot until the relay station 18 signs off.

A public switched telephone interface 244 connect the relay station 18 to other networks, destination addresses or other relay stations 18.

The key relay station technical parameters are summarized in Table Eight.

**Table Eight**

| **Key Relay Station Technical Parameters** Antenna | |
|---|---|
| Operating Frequency | 137-138 MHz & 148-149.9 MHz |
| Polarization | LHC |
| Gain | 16 dBi |
| Half Power Beamwidth | 22.5 degrees |

| Receiver | |
|---|---|
| Frequency Band | 137.175-137.825 MHz |
| Channel Bandwidth | 50 KHz |
| Number of Channels | 1 |
| Doppler Shift | 2.1 KHz |
| Demodulation | Differential OQPSK |
| Decoding | Soft Decision Viterbi, r = 7/8, K = 7 |
| Data Rate | 50 KBPS |
| Noise Figure | 4 dB |
| Implementation Loss | 2 dB |

| Transmitter | |
|---|---|
| Frequency Band | 148-149.9 MHz |
| Channel Bandwidth | 50 KHz |
| Signal Bandwidth (99% power) | 71.3 KHz |
| Number of Channels | 1 |
| Transmit Power | 1.8 Watts |
| Modulation | Differential OQPSK and FSK |
| Coding | rate-7/8, constraint length 7 convolutional |
| Data Rate | 50 KBPS |

| Frequency Reference | |
|---|---|
| Frequency Accuracy | 0.1 PPM over environment and time |

### Other System Services

Besides those services identified above, other system services can be easily provided by the present invention. Some of these are described below.

### Seaborne Radio Beacon System

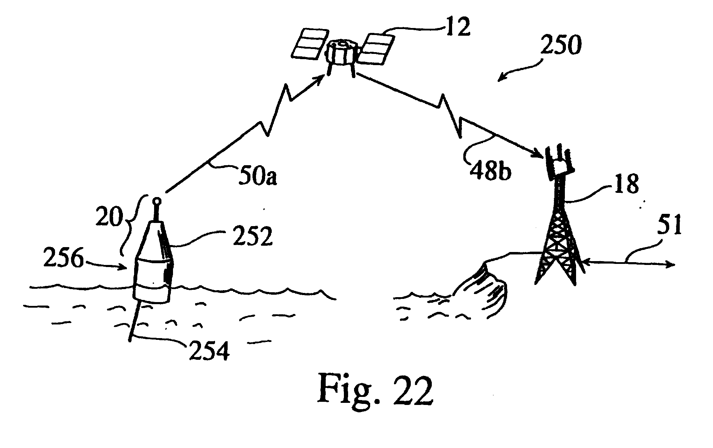

Figure 22 shows schematically a radio beacon system 250 for monitoring sea environment and tracking data with deployed buoys 252 transmitting data through the satellite constellation-to-pound terminal links 50a, 48b, 51 of this invention. A low cost buoy 252 is fitted with environmental and weather instrumentation 256 and/or an underwater listening device 254 such as sonar. The buoy also contains a position-determining device such as LORAN or Global Positioning System (GPS). An on-board user terminal 20 sends buoy-collected environmental, tracking and positioning data through the TSU 50a to the satellite 12. The data is then disseminated to a receiving party through a relay station 18 and terrestrial communication links 51. As an example, oil spills can be tracked by dropping such a buoy 252 into the slick from an aircraft.

### Interactive Television Return Link

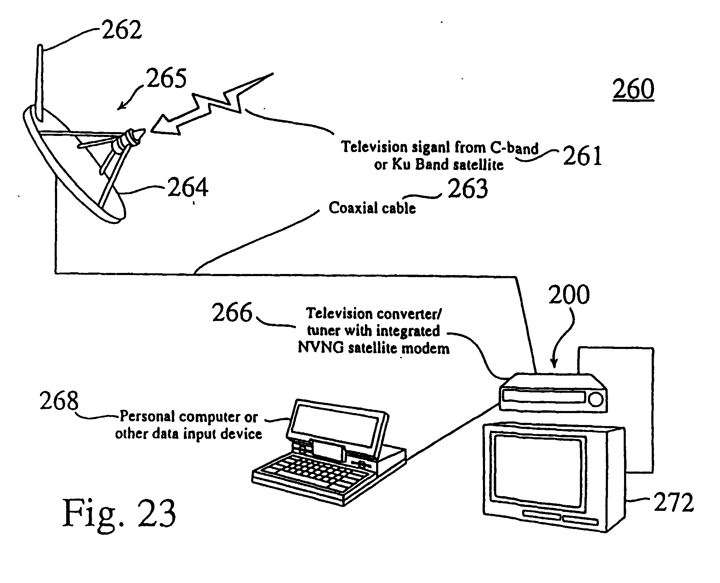

Figure 23 is a schematic depiction of an interactive television system 260 which uses a return link from a viewer to a TV broadcaster through the satellite constellation 10 of this invention. A television signal from a direct broadcasting satellite such as C-band or Ku band devices is captured by an integrated antenna system 265 consisting, for example, of a small dish antenna 264 which receives the TV satellite signal and an integrated whip antenna 262 for communication with a satellite 12 operating in accordance with the present invention. The user views the television program on a TV screen 272 which is derived from a television signal 261 in a TV converter 266, carried through coaxial cable 263. The converter 266 is integrated with a modem 200 and connected to a personal computer or other data input device 268. The user sends his interactive responses to a broadcaster by entering them in the computer 268 which is converted to a TSU signal 50a by the modem 200 and transmitted to a satellite 12 for delivery to the broadcaster.

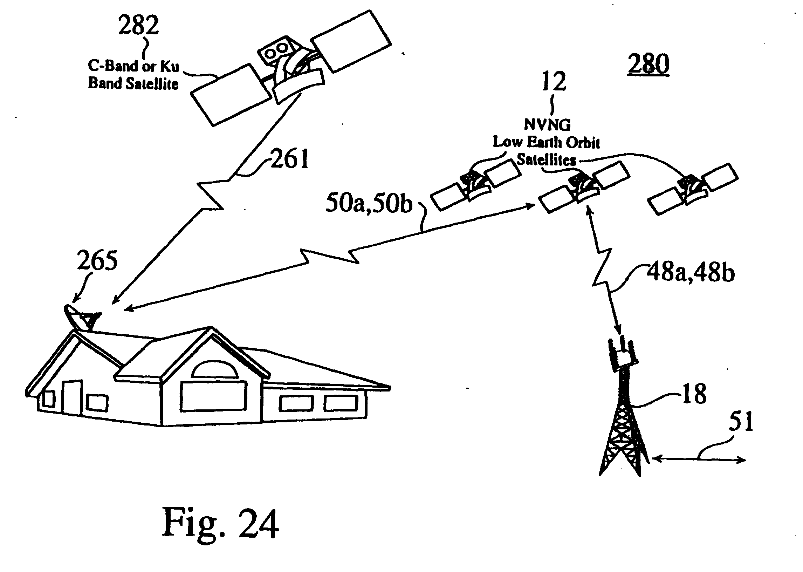

Figure 24 depicts the return link from a viewer of a direct broadcasting satellite 282 TV broadcast 261 through the terminal-satellite uplink 50a, satellite constellation-to-ground terminal links of this invention and terrestrial based data networks 51. It is also possible for a broadcaster or intermediary to confirm the receipt of the user's data by returning a message through the satellite constellation-to-ground terminal links and the terminal-satellite downlink 50b.

### Connectivity of Office or Factory Data to Other Systems from Within a Structure

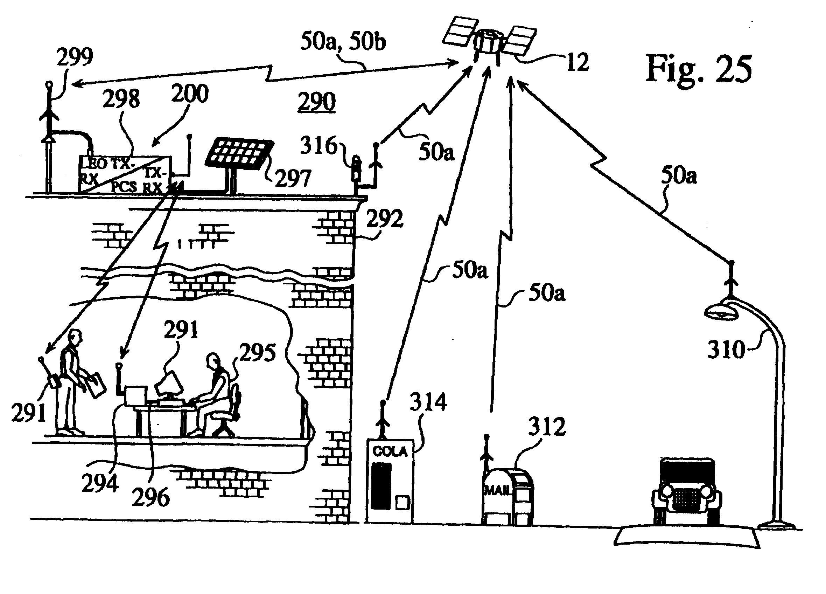

Figure 25 is a schematic diagram showing a method 290 of providing connectivity to other systems from movable devices or devices with low rate data inside a building 292 or other structure which shields the user's radio signal from the satellite. The data input devices 291 may be pagers, computers, facsimile machines, copy machines, etc. A non-licensed personal communication service (PCS) 294 is coupled to a data input device 291 through a coupling device 296. The coupling device 296 may be a PCMCIA, RS232, RJ11 or other connector. Such a personal communication system is limited to low power, short range transmitters. The data is transmitted by the PCS to a nearby, integrated terminal 298 which contains a PCS transceiver coupled to a LEO One USA™ modem 200. An antenna 299 is connected to the modem 200. This system offers a user 295 two-way data communication even though he or she is shielded in a windowless structure or perhaps underground. The modem 200 retransmits the data through the antenna 299 as a TSU signal 50a to a passing satellite 12 in the constellation 10 of the invention. The data is forwarded by the satellite 12 and relay stations 18 and return messages are received from a satellite 12 via the TSD 50b and relayed through the unlicensed PCS 294. The integrated terminal 298 may be powered by a solar panel 297. Such systems 290 are particularly useful in very old structures, third-world locations and other situations where direct wiring from the data input device 291 to the modem 200 is difficult or expensive to install. The system 290 also has use where the data input device 291 is movable or portable.

### Time Synchronization Broadcasts

Many devices, including consumer products and industrial control devices require or make use of time information. Electric clocks can drift or be delayed by power outages. Currently, a time standard is supplied world-wide by The National Bureau of Standards through short wave radio stations WWV. The recipient must have a short wave receiver and substantial antenna to receive these signals reliably. For automatic synchronization, the WWV signal must be decoded and applied to a device through sophisticated electronics means which would be much too expensive for the average consumer and the average industrial user.

Satellites 12 orbiting in the constellation 10 of this invention can transmit narrow data messages at regular intervals that can be used to synchronize clocks to the National Bureau of Standards clock anywhere in the world through a relatively inexpensive user terminal. A satellite 12 would broadcast Universal Coordinated Time (UTC) signals which is converted to local time by a customer setting the appropriate time zone into his system.

### Monitoring Remotely Installed Devices or Machines for Non-Functioning or Needed Repair

Almost any type of device or machine remotely installed from a responsible owner's home office can be monitored for non-functioning by means of an inexpensive user terminal 20 connected to the device to be monitored and transmitting the data through satellite 12 orbiting in the constellation 10 of this invention. This type of monitoring reduces or eliminates the need for personnel to patrol the devices or machines. For example, remote boulevard lights 310 can be fitted with a switch which indicates failure of the lamp. A transmitter reacts to the operation of the switch by sending a packet containing a short code which identifies the location of the boulevard light 310. Other similar uses are possible: monitoring overnight courier service drop and for postal service deposit box 312 for packages to be picked up or for replenishing supplies; monitoring vending machines 314 for replenishing stock; monitoring aircraft warning lights 316 on tall buildings and/or hazards including electrical radio or television towers, where failure of these lights can result in significant financial penalties to the owner, *etc*.

### Wide Area Broadcast of Updated Information

Market data on a near-real time basis can be disseminated on a global basis through satellites 12 orbiting in the constellation 10 of this invention. Field sales representatives can receive, for example, updated price adjustments and monetary exchange rates. Brokers can receive updated securities quotes from world-wide markets, interest rates and commodity prices. Other users can receive updated weather, sports information, *etc*. While the transmission of these data is well known, the use of the satellite system of the present invention presents a novel, unique and efficient method of reaching users on a regional, national and international basis, leading to a more competitive business.

### INDUSTRIAL APPLICABILITY

The *Optimal Coverage Satellite System* described above will provide new non-voice, non-geostationary mobile satellite service to millions of subscribers across the globe. The present invention will offer a wide range of vital services, including tracking and monitoring for the transportation industry; fixed site monitoring of industrial/utility locations; monitoring and tracking for misplaced or stolen assets; transmission of e-mail; two-way alphanumeric paging and emergency services.

### CONCLUSION

Although the present invention has been described in detail with reference to a particular preferred embodiment, persons possessing ordinary skill in the art to which this invention pertains will appreciate that various modifications and enhancements may be made without departing from the spirit and scope of the claims that follow. The various orbital parameters, altitudes and populations and locations of the user terminals and relay stations that have been disclosed above are intended to educate the reader about preferred embodiments, and are not intended to constrain the limits of the invention or the scope of the claims. The *List of Reference Characters* which follows is intended to provide the reader with a convenient means of identifying elements of the invention in the specification and drawings. This list is not intended to delineate or narrow the scope of the claims.

### LIST OF REFERENCE CHARACTERS

### Figure 1

- 10: Constellation of satellites operating in pairs of orbital planes, inclined at 50 degrees
- 12: Satellite
- 14: Inclined orbital plane
- 15: Conjugate inclined orbital plane
- 16: Equator
- 18: Ground relay station
- 20: Distributed user terminals
- 22: Conjugate pairs of orbital planes
- E: Earth

### Figure 3

- 12: Satellite
- 24: Satellite body
- 26: Helical antennas
- 28: Solar panels

### Figure 4

- 18: Ground relay station
- 30: Elevation mask angle
- E: Earth

### Figure 5

- 12: Satellite
- 12a: Satellite leaving ascending node of orbital plane
- 12b: Satellite leaving descending node of conjugate orbital plane
- 14: Inclined orbital plane
- 15: Conjugate orbital plane
- 16: Equator
- 22: Conjugate pairs of orbital planes
- 40a: Ascending node of orbital plane
- 40b: Descending node of conjugate orbital plane
- E: Earth
- NP: North Pole
- SP: South Pole

### Figure 9

- 12: Satellite
- 18: Ground relay station
- 20: User terminals
- 48a: Relay station-satellite uplink (RSU)
- 48b: Relay station-satellite downlink (RSD)
- 50a: User terminal-satellite uplink (TSU)
- 50b: User terminal-satellite downlink (TSD)

### Figure 10

- 12: Satellite
- 14: Inclined orbital plane
- 16: Equator
- 18: Ground relay station
- 48b: Relay station-satellite downlink (RSD)
- 51: Terrestrial links, *e.g*., public telephone network
- 52: Geostationary satellite
- 53: Satellite very small aperture terminal (VSAT) links
- 54: Latitude 60 degrees North
- 56: Latitude 30 degrees North
- 58: Latitude 30 degrees South

### Figure 11

- 12: Satellite
- 48a: Relay station-satellite uplink (RSU)
- 48b: Relay station-satellite downlink (RSD)
- 50a: User terminal-satellite uplink (TSU)
- 50b: User terminal-satellite downlink (TSD)

### Figure 12

- 60: Packet structure diagram

### Figure 13

- 70: RF communications subsystem
- 80: Tracking, telemetry & control computer
- 90: Attitude determination and control subsystem
- 100: Thermal control subsystem
- 110: Electric power subsystem

### Figure 14

- 120: Communications payload block diagram
- 121: Band sampling receiver

### Figure 15

- 122: Satellite antenna gain pattern

### Figure 16

- 123: Baseband sampling embodiment of the digital band sampling receiver
- 124: Band pass filter
- 125: Input band signal
- 126: RF amplifier
- 128: Power divider
- 129: High frequency oscillator
- 130: Mixer
- 132: 90 degree phase shifter
- 134: Low pass filter
- 136: Analog-to-digital converter
- 138: Digital signal processor
- 140: Output signal vector
- I: Baseband signal
- Q: Phase-shifted baseband signal
- I(n): Digital signal samples
- Q(n): Phase-shifted, digital signal samples

### Figure 17

- 124: Band pass filter
- 125: Input signal
- 126: RF amplifier
- 129: High frequency oscillator
- 130: Mixer
- 134: Low pass filter
- 136: Analog-to-digital converter
- 138: Digital signal processor
- 140: Output signal vector

### Figure 18

- 200: Modem module
- 202: Expanded memory
- 204: Parallel interface
- 206: AC adapter
- 208: Palmtop personal computer
- 210: Global positioning system GPS)
- 212: Battery pack
- 214: Whip antenna

### Figure 19

- 200: Modem module
- 214: Antenna
- 220: Terminal-to-satellite downlink (TSD) receiver
- 222: Terminal-to-satellite uplink (TSU) transmitter
- 224: Computer subsystem
- 226: Frequency reference

### Figure 21

- 230: Relay station functional block diagram
- 232: Relay station-to-satellite uplink (RSU) transmitter
- 234: Relay station-to-satellite downlink (RSD) receiver
- 236: Computer subsystem
- 238: Frequency reference
- 240: Tracking, telemetry and control subsystem
- 242: Network operation and control center (NOCC) subsystem
- 244: PSTN interface

### Figure 22

- 250: Schematic illustration of a user service employing deployed buoys for sending remote data
- 12: Satellite
- 18: Ground relay station
- 20: User terminal
- 48b: Relay station-satellite downlink (RSD)
- 50a: User terminal-satellite uplink (TSU)
- 51: Terrestrial link, *e.g*., public telephone network
- 252: Deployed buoy
- 254: Underwater listening device
- 256: Environmental & weather instruments

### Figure 23

- 260: Schematic depiction of an interactive television system using a return link from a viewer to a TV broadcaster through the satellite constellation of this invention.
- 200: LEO One™ Modem
- 261: Television signal provided by broadcasting satellite
- 262: TSU whip antenna
- 263: Coaxial cable from antenna to video and data input equipment
- 264: TV satellite antenna
- 265: Integrated antenna system
- 266: TV converter/tuner and modem for communicating with the satellite constellation used in this invention
- 268: Data input device, *e.g*., personal computer
- 272: TV receiver

### Figure 24

- 280: Schematic depiction of the return link from a viewer of a satellite TV broadcast through the satellite constellation-to-ground terminal links of this invention and terrestrial based data networks
- 12: Satellite
- 18: Relay station
- 50a: Terminal satellite uplink
- 50b: Terminal satellite downlink
- 51: Terrestrial link
- 261: Television signal provided by broadcasting satellite
- 282: TV broadcasting satellite

### Figure 25

- 290: Depiction of a method of providing connectivity to movable devices or devices with low rate data inside a building which shields the user's radio energy from the satellite
- 12: Satellite
- 50a: Terminal satellite uplink
- 50b: Terminal satellite downlink
- 200: LEO One™ modem
- 291: Data input device, *e.g*., personal computer, handy-talky, pager, etc.
- 292: Building shielding user from satellite
- 294: Personal communication system (PCS) within building
- 295: User
- 296: Interconnection device; *e.g*., PCMCIA, RS232 or other modern
- 297: Solar panel
- 298: Integrated pcs transmitter/receiver and TSU transmitter/TSD receiver
- 299: TSU/TSD antenna
- 310: Boulevard light
- 312: Mail drop
- 314: Vending machine
- 316: Tall building/Hazard warning lights

## Claims

1. A satellite communications system comprising:
a plurality of relay stations (18):
a plurality of user terminals (20);
a constellation (10) of satellites (12) operating in low Earth orbits; equally spaced and operating in a plurality of pairs;
each of said plurality of satellites (12) being capable of communicating with at least one of said plurality of relay stations (18) and with at least one of said plurality of user terminals (20);
said plurality of user terminals (20) being randomly distributed, primarily in portions of the Earth (E) which are inhabited;
characterised in that:
said satellites (12) are located equally spaced in a plurality of pairs of low Earth orbital planes (22); each of said pairs of low Earth orbital planes (22) including an inclined orbital plane (14) and a conjugate inclined orbital plane (15);
said inclined orbital plane (14) and said conjugate inclined plane (15) each having an ascending node (40a) and a descending node (40b); and
said ascending node (40a) of said inclined orbital plane (14) being displaced by approximately 180 degrees right ascension from said ascending node (40a) of said conjugate inclined orbital plane (15);
and in that said plurality of relay stations (18) are distributed at locations on the Earth (E) which maximise coverage for communicating and minimise time to forward messages and data between any two of said plurality of user terminals (20); said relay stations (18) being capable of communicating with each other through a satellite link and a public switched telephone network link, said relay stations (18) being capable of selecting between said links to forward said messages and data between said user terminals (20).

2. The satellite communications system as claimed in claim 1, wherein said relay stations (18) are further capable of selecting among alternative means to forward messages and data according to levels of mode of delivery.

3. A satellite communication system as claimed in claim 1 or 2, in which one or more of said orbit planes (14, 15) may be between 100 km and 12,000 km altitude, preferably between 100 km and 1,200 km, with the most preferred embodiment being a 950 km altitude which provides the best compromise between system coverage for users and cost.

4. A satellite communication system as claimed in any preceding claim, in which one or more of said orbit planes (14, 15) may be inclined between zero degrees and 180 degrees to the Earth's Equator, preferably between 40 degrees and 80 degrees, with the most preferred embodiment inclined at 50 degrees to the Earth's Equator which provides ideal system coverage for the most densely populated latitudes of the Earth.

5. A satellite communication system as claimed in any preceding claim, in which one or more adjacent said orbit planes (14, 15) may have an interplane phase angle between zero degrees and 360 degrees, preferably between zero degrees and 45 degrees, the most preferred embodiment being 7.5 degrees.

6. A satellite communication system as claimed in any preceding claim, in which there may be between two and twelve satellites (12) in an orbital plane (14, 15), preferably between five and eight, with the most preferred embodiment having six satellites (12) per orbital plane (14, 15), which provides the best compromise between system efficiency and cost.

7. A satellite communication system as claimed in any of claims 1 to 5, in which there may be between two and twelve orbital planes (14, 15), preferably between four and ten, with the most preferred embodiment having eight orbital planes (14, 15), which provides the best satellite visibility from the Earth's northern latitudes.

8. The satellite communications system as claimed in claim 1 or 2, in which
said constellation (10) of satellites (12) includes forty-eight satellites (12) operating at approximately 950 km altitude;
said plurality of pairs of low Earth orbital planes (22) includes eight of said inclined orbital planes (14, 15), six of said satellites (12) operating in each of said inclined orbital planes (14, 15); and
said ascending node (40a) of said inclined orbital planes (14, 15) occur at right ascension angles of approximately 0, 45, 90, 135, 180, 225, 270 and 315 degrees respectively.

9. A satellite communications system as claimed in any preceding claim, wherein each satellite (12) comprises a communication payload (120) with a computer subsystem having a memory, wherein the computer subsystem is capable of processing received messages and/or data, scoring them in said memory, and retransmitting them as required to any of said plurality of user terminals (20) and to any of said relay stations (18) at a later time, whereby the satellite communication system constitutes a store and forward system.

10. A satellite communication system as claimed in claim 9, wherein the computer subsystem also makes channel assignments.

11. A satellite communication system as claimed in claim 9 or 10, in which:
each communications payload (120) establishes a relay-satellite uplink (48a) and a relay-satellite downlink (48b) and communicates with at least one of said plurality of relay stations (18) therewith, and for establishing a terminal-satellite uplink (50a), and a terminal-satellite downlink (50b) and communicates with at least one of said plurality of user terminals (20) therewith;
each of said plurality of relay stations (18) has a relay-satellite uplink transmitter (232), a relay-satellite downlink receiver (234), and a very small aperture terminal, hereinafter referred to as VSAT, link (53) for communicating with a geostationary communication satellite (52);
said relay-satellite uplink (48a), said relay-satellite downlink (48b), said very small aperture terminal link (53), and said terrestrial link (51) being used for communication between one said relay station (18) and another said relay station (18) and with each of said plurality of user terminals (20;
each of said plurality of user terminals (20) has a modem (200) for communicating said message through said terminal-satellite uplink (50a) to one of said plurality of communication satellites (12); and
said message is stored on board said satellite (12) and forwarded to said destination through such combination of said terminal-satellite uplink (50a), said relay station-satellite links (48a, 48b), said terminal satellite downlink (50b), said terrestrial link (51) and/or said VSAT link (53) to minimise the time required to forward said message.

12. A satellite communication system as claimed in claim 11, in which said terminal satellite uplink (48a), said terminal-satellite downlink (48b), said relay-satellite uplink (50a), and said relay-satellite downlink (50b) are operated at radio frequencies allocated to non-voice, non-geosynchronous mobile satellite systems.

13. A satellite communication system as claimed in claim 11 or 12, in which said communications payload (120) includes:
a dynamic, adaptive channel assignment system, on board each of said plurality of satellites (12), for monitoring an input band signal (125) carried on said terminal-satellite uplink (50a) at radio frequency and assigning unoccupied frequency channels to each of said plurality of user terminals (20);
said adaptive channel assignment system having an output of a plurality of rapidly obtained signal output vectors (140) derived from an average power estimate corresponding to signals on segments of said input band signal (125); said signal output vectors (140) containing information of frequency channels currently unoccupied.

14. A satellite communication system as claimed in claim 13, in which said dynamic, adaptive channel assignment system includes:
a band-sampling receiver (121) which produces said signal output vectors (140) from said input band signal (125) input to a baseband sampling section (123); said baseband sampling section (123) having as components
an RF band pass filter (124) for reducing out-of-band interference;
an RF amplifier (126) for amplifying an output from said bandpass filter (124);
a power divider (128) for equally dividing an output from said RF amplifier (126) into a first output and a second output;
a high frequency oscillator (129);
a 90 degree phase shifter (132);
a first mixer (130) for converting said first output of said power divider (128) to a first baseband signal (I) with a hetrodyne signal from said high frequency oscillator (129);
a second mixer (130) for converting said second output of said power divider (128) to a second baseband signal (Q) with a signal from said high frequency oscillator (129), phase shifted 90 degrees by said 90 degree phase shifter (132);
a plurality of low pass filters (134) for preventing aliasing of said first baseband signal (I) and said second baseband signal (Q);
a plurality of analog-to-digital converters (129) for converting said first baseband signal (I) to a first digital signal sample (I(n)) and converting said second baseband signal (Q) to a second digital signal sample (Q(n)); and
a digital signal processor (138) for generating said output signal vectors (140) from inputs of said first digital signal samples (I(n)) and said second digital signal samples (Q(n));
said components (124, 126, 128, 129, 130, 132, 134, 136, 138) of said baseband sampling section (123) cooperating together to produce an average power estimate for segments of said band of radio frequencies (125) and to generate said output vector (140).

15. A satellite communication system as claimed in any of claims 11 to 14, in which said user terminal (20) is adapted to cracking and reporting a moving object's position and environment, said system further comprising:
a global positioning system module (210), hereinafter referred to as GPS; and
environmental instrumentation (256);
said GPS module (210) and said environmental instrumentation (256) being coupled to said modem (200) and supplying geographical position information and environmental data which is then transmitted as digital data to a receiving party through such combination of said terminal-satellite uplink (50a), said relay station-satellite links (48a, 48b), said terminal satellite downlink (50b), said VSAT link (53) and/or said terrestrial link (51) to minimize said time to forward said digital data to said receiving party.

16. A satellite communication system as claimed in any of claims 11 to 15, in which said user terminal (20) is adapted to monitoring data from systems, movable devices and devices with low data rate contained within a structure (292) which shields a user's radio signal from said satellites (12), further comprising:
an input data device (291) for supplying digital business and/or manufacturing information;
a personal communication service, hereinafter referred to as PCS, system (294) located within said structure (292);
a coupling device (296);
said input data device (291) being coupled to an input of said PCS system (294) through said coupling device (296);
said PCS system (294) coupled at an output to said modem (200) of said user terminal (20); and
said business and/or manufacturing information being relayed from said input data device (291) through said PCS system to said modem (20) for transmission by said user terminal (20) to a receiving party through such combination of said terminal-satellite uplink (50a), said relay station-satellite links (48a, 48b), said terminal satellite downlink (50b), said VSAT link (53) and/or said terrestrial link (51) to minimize said time to forward said digital data to said receiving party.

17. A satellite communication system as claimed in any of claims 11 to 15, adapted to an interactive television system (260) which uses direct television programming supplied by a broadcaster, further comprising:
an antenna system (265) including
a small television dish antenna (264) for receiving a television satellite signal (261) and a whip antenna (262) for communication with said communication satellites (12);
a television convener (266) coupled to said modem (200);
a television receiver (272) for displaying said television satellite signal to a user;
a data input device (268);
said user being capable of entering interactive responses to said television broadcaster by means of said data input device (268); and
said responses being transmitted by said user terminal (20) to one of said communication satellites (12) for delivery to said broadcaster through such combination of said terminal-satellite uplink (50a), said relay station-satellite link (48a, 48b), said terminal-satellite downlink (50b), said VSAT link (53) and/or said terrestrial link (51) to minimize said time to forward said digital data to said receiving party.

18. A satellite communication system, as claimed in any of claims 11 to 15, in which said user terminal (20) is adapted to monitoring the functioning of a boulevard light (310).

19. A satellite communication system, as claimed in any of claims 11 to 15, in which said user terminal (20) is adapted to monitoring the functioning of a vending machine (314).

20. A satellite communication system, as claimed in any of claims 11 to 15, in which said user terminal (20) is adapted to monitoring the contents of a courier service drop and/or postal deposit box (312).

21. A satellite communication system, as claimed in any of claims 11 to 15, in which said user terminal (20) is adapted to monitoring the functioning of aircraft warning lights installed in tall buildings and/or structural hazards (316), including electrical, radio, or television transmission towers.

22. A satellite communication system, as claimed in any preceding claim, in which each of said communication satellites (12) operate in orbits which may preferably be elliptical orbits, or elliptical orbits with foci having different lengths, with the most preferable being circular orbits, which support the lowest power requirements for user terminal transmitters.

23. A method for conducting communications with a satellite communication system, comprising the steps of:
deploying a constellation (10) comprising a plurality of communication satellites (12) in a plurality of low Earth orbital planes;
distributing a plurality of user terminals (20) over the Earth (E);
distributing a plurality of relay stations (18) at places on the Earth (E) to facilitate the forwarding of a message between any of said plurality of user terminals (20) and/or constellation of communication satellites (12) and a destination;
each of said plurality of satellites (12) being capable of communicating with at least one of said plurality of relay stations (18) and with at least one of said plurality of user terminals (20);
the method being characterised in that:
said satellites are deployed at an altitude of between 100 km and 1,200 km; said orbital planes include four pairs of inclined orbital planes;
each of said pairs include an inclined orbital plane (14) and a conjugate inclined orbital plane (15);
said inclined orbital plane (14) and said conjugate inclined plane (15) each have an ascending node (40a) and a descending node (40b); and
said ascending node (40a) of said inclined orbital plane (14) is displaced by approximately 180 degrees right ascension from said ascending node (40a) of said conjugate inclined plane (15), whereby the ascending modes of the eight inclined orbital planes occur at right ascensions angles of approximately 0, 45, 90, 135, 180, 225, 270 and 315 degrees,
and providing a terrestrial link (51) and connecting at least two of said plurality of relay stations (18) to said terrestrial link (51) said relay stations (18) being capable of communication with each other through a satellite link, and said relay stations (18) selecting between said terrestrial and satellite links to forward said messages between said user terminals (20).

24. A method as claimed in claim 23, in which the step of providing a terrestrial link (51) includes the step of:
connecting at least two of said plurality of relay stations (18) to a publicity switched telephone network, hereinafter referred to as PSTN.

25. A method as claimed in claim 23 or 24, in which the step of deploying a constellation (10) of communication satellites (12) further includes the steps of:
providing each of said plurality of satellites (12) with a communications payload (120) for establishing a relay-satellite uplink (48a) and a relay-satellite downlink (48b) for communicating with at least one of said plurality of relay stations (18);
providing each of said plurality of satellites (12) with a communications payload (120) for establishing a terminal-satellite downlink (50b) and a terminal-satellite uplink (50a), for communicating with at least one of said plurality of user terminals (20);
providing each of said plurality of relay stations (18) with a relay-satellite uplink transmitter (232), a relay-satellite downlink receiver (234), a very small aperture terminal (VSAT) link (53) for communicating with a geostationary, communication satellite (52) and a terrestrial link interface (51); and
using said relay-satellite uplink (48a), said relay-satellite downlink (48b), said very small aperture terminal link (53), and said terrestrial link (51) for communication between one of said relay stations (18) and/or another of said relay stations (18) and with said user terminals (20).

26. A method as claimed in claim 25, further including the steps of:
communicating said message from one of said plurality of user terminals (20) having a modem (200), through said terminal-satellite uplink (50a) to one of said plurality of satellites (12);
storing said message on board said satellite (12); and
forwarding said message to said destination through such combination of said relay station-satellite links (48a, 48b), said terminal satellite downlink (50b), said terrestrial link (51) and said VSAT link (53) to minimize the time required to forward a message.

27. A method as claimed in claim 25 or 26, further including the steps of:
monitoring input band signals (125) carried on said terminal-satellite uplink (50a) at radio frequency;
deriving an output of a plurality of rapidly obtained signal output vectors (140) from an average power estimate corresponding to input band signals (125) monitored with a dynamic, adaptive channel assignment system, on board each of said plurality of satellites (12); said signal output vectors (140) containing information of frequency channels currently unoccupied; and
assigning unoccupied frequency channels to each of said plurality of user terminals (20) with said adaptive channel assignment system.

28. A method as claimed in any of claims 25 to 27, in which the step of distributing a plurality of user terminals (20) includes the steps of:
deploying a buoy (252) in a maritime location;
said buoy (252) containing environmental and weather instrumentation (256) for collecting environmental data; and/or
an underwater listening device (254) for collecting vessel-tracking data; and/or
a position-determining device (LORAN, GPS) for collecting positioning data; and
one of said plurality of user terminals (20) for transmitting said environmental, tracking and/or positioning data through such combination of said terminal-satellite uplink (50a), said relay station-satellite links (48a, 48b), said terminal-satellite downlink (50b), said VSAT link (53) and said terrestrial link (51) to minimize the time required to forward said data.

29. A method as claimed in any of claims 25 to 27, in which the step of distributing a plurality of user terminals (20) includes the steps of:
providing an antenna system (256) at a site of a television viewer;
said antenna system (256) having a first receiving antenna (264) for receiving broadcast television signals (261) provided by a broadcaster from a direct-broadcasting satellite (282), and having a second antenna (262) for communication with a satellite (12) of said constellation (10);
providing a television converter/tuner (266) having a modem (200); said television converter/tuner (266) coupled to said antenna system (256);
coupling an input device (268) for entering data and a television receiver (272) for displaying said television signals (261), to said television converter/tuner (266); and
said television viewer sending responses to said broadcast television signals (261) displayed on said television receiver (272) to said broadcaster by entering said responses on said data input device (268) and transmitting said responses through such combination of said terminal-satellite uplink (50a), said relay station-satellite links (48a, 48b), said terminal-satellite downlink (50b), said VSAT link (53) and said terrestrial link (51) to minimize the time required to forward said data.

30. A method as claimed in any of claims 25 to 27, in which the step of distributing a plurality of user terminals (20) includes the steps of:
providing communications to one or more of said satellites (12) in said constellation of communication satellites (10), from movable devices (291) which are shielded from radio signals (50a, 50b) transmitted and received by said satellites (12) by a man-made or natural structure (292), by relaying data from said movable devices (291) through a low-power, personal communication system (294) to a nearby, user terminal (298) communicating with at least one of said plurality of satellites (12).

31. A method as claimed in any of claims 25 to 27, in which the step of distributing randomly a plurality of user terminals (20) includes the steps of:
coupling one of said plurality of user terminals (20) to a clock in a local clock system; said local clock system responding to Universal Coordinated Time (UTC) signals;
obtaining said Universal Coordinated Time, hereinafter referred to as UTC, signals provided by the National Bureau of Standards through a communication link (50a, 51);
broadcasting said Universal Coordinated Time (UTC) signals through said satellites (12) in said constellation (10);
receiving said Universal Coordinated Time (UTC) signals at one of said plurality of user terminals (20);
passing said Universal Coordinated Time (UTC) signals to said local clock system; and
synchronizing said clock in said local clock system to said Universal Coordinated Time (UTC) signals.

32. A method as claimed in any of claims 25 to 27, in which the step of distributing a plurality of user terminals (20) includes the steps of:
coupling a user terminal (20) to a monitoring device connected to a remotely installed system;
said monitoring device delivering a signal indicating proper functioning of said remotely installed system to one of said plurality of user terminals (20);
monitoring proper functioning of said remotely installed system with said monitoring device; and
transmitting said signal through such combination of said terminal-satellite uplink (50a), said relay station-satellite links (48a, 48b), said terminal-satellite downlink (50b), said VSAT link (53) and/or said terrestrial link (51) to minimize the time required to forward said data.

33. A method as claimed in any of claims 25 to 27, further including the steps of:
obtaining commercial market information in real time through one or more communication links (50a, 51);
broadcasting said commercial market information through said satellites (12) in said constellation (10); and
receiving said commercial market information at one or more of said plurality of user terminals (20) for use in commercial transactions.

34. A method as claimed in any of claims 25 to 27, further including the step of:
operating said terminal-satellite uplink (50a), said terminal-satellite downlink (50b), said relay-satellite uplink (48a), and said relay-satellite downlink (48b) at radio frequencies allocated to non-voice, non-geosynchronous mobile satellite systems.

35. A method as claimed in any of claims 25 to 27, adapted for tracking and reporting a moving object's position and environment, further comprising the steps of:
providing a global positioning system (GPS) module (210);
providing environmental instrumentation (256);
coupling said GPS module (210) and said environmental instrumentation (256) to said modem (200) and supplying geographical position information and environmental data to said user terminal (20) through said modem (200); and
transmitting said information as digital data to a receiving party through such combination of said relay station-satellite links (48a, 48b), said terminal satellite downlink (50b), said VSAT link (53) and said terrestrial link (51) to minimize the time required to forward said data.

36. A method as claimed in any of claims 25 to 27, adapted to monitoring data from systems, movable devices and/or devices with low data rate contained within a structure (292) which shields a user's radio signal from said satellites (12), further comprising the steps of:
supplying business and/or manufacturing information with an input data device (291);
providing a personal communication service, hereinafter referred to as PCS, system (294) located within said structure (292);
connecting said input data device to an input of said PCS service with a coupling device (296);
coupling said PCS system (294) at an output to said modem (200) of said user terminal (20); and
relaying said business and/or manufacturing information from said input data device (291) through said PCS system to said modem (200); and
transmitting said business and/or manufacturing information with said user terminal (20) to a receiving party through such combination of said terminal-satellite uplink (50a), said relay station-satellite link (48a, 48b), said terminal-satellite downlink (50b), said VSAT link (53) and/or said terrestrial link (51) to minimize the time requital to forward said data.

37. A method as claimed in claim 36, in which said step of supplying business and/or manufacturing information with an input data device (291) includes monitoring data from remotely installed equipment for non-functionality and/or needed repair.

38. A method as claimed in claim 32 or 37, in which the step of monitoring data from remotely installed equipment for non-functionality and/or needed repair includes monitoring the functioning of a boulevard light (310).

39. A method as claimed in claim 32 or 37, in which the step of monitoring data from remotely installed equipment for non-functionality and/or needed repair includes monitoring the functioning of a vending machine (314).

40. A method as claimed in claim 32 or 37, in which the step of monitoring data from remotely installed equipment for non-functionality and/or needed repair includes monitoring the contents of a courier service drop and/or postal service deposit box (312).

41. A method as claimed in claim 32 or 37, in which the step of monitoring data from remotely installed equipment for non-functionality and/or needed repair includes monitoring the functioning of aircraft warning lights installed in tall buildings and/or structural hazards (316), including electrical, radio, or television transmission towers.

42. A method as claimed in any of claims 25 to 27, adapted to an interactive television system (260) which uses direct television programming supplied by a broadcaster, further comprising the steps of:
supplying an antenna system (265) including
a small television dish antenna (264) for receiving a television satellite signal (261) and a whip antenna (262) for communication with said telecommunication system satellites (12);
coupling a television converter (266) with said modem (200);
displaying said television satellite signal to a user on a television receiver (272);
coupling a data input device (268) to said modem (200);
entering a user's interactive responses to said television display into said data input device (268) converting therein said responses to digital data and inputting said digital data to said modem (200); and
transmitting said responses input to said modem (200) from said user terminal (20) to one of said optimal coverage satellites (12) for delivery to said broadcaster through such combination of said terminal-satellite uplink (50a), said relay station-satellite links (48a, 48b), said terminal-satellite downlink (50b), said VSAT link (53) and said terrestrial link (51) to minimize the time required to forward said data.

43. A method as claimed in any of claims 25 to 27, adapted to synchronizing clocks anywhere in the world, further comprising the steps of:
monitoring Coordinated Universal Time (UTC) signals and other time standard data from the National Bureau of Standards, broadcast through short wave radio station WWV, received by one of said plurality of satellites (12) in said constellation (10), and transmitted to said user terminal (20) through said terminal-satellite downlink (50b);
decoding said signals at said modem (200) in said user terminal (20);
supplying decoded said signals to a clock coupled to said modem (200); and
synchronizing said clock with UTC.

44. A method as claimed in claim 23, wherein each satellite is provided with a communications payload (120) with a computer subsystem having a memory, wherein the computer subsystem is capable of processing received messages and/or data, storing them in said memory, and retransmitting them as required to any of said plurality of user terminals (20) and to any of said relay stations (18) at a later time, whereby the satellite communication system constitutes a store-and-forward system.

45. A method as claimed in claim 44, wherein the computer subsystem also makes channel assignments.

46. A method as claimed in claim 44 or 45, in which the step of deploying a constellation (10) of communication satellites (12) includes the step of:
deploying forty-eight satellites (12) in said plurality of pairs of inclined orbital planes (22), including eight circular orbital planes (14, 15), six of said satellites (12) operating in each of said eight circular orbital planes (14, 15) at approximately 950 km altitude.

## Patentansprüche

1. Satelliten-Kommunikationssystem, enthaltend:
- mehrere Relaisstationen (18),
- mehrere Benutzerstationen (20),
- eine Anordnung (10) von in niedrigen Erdumlaufbahnen arbeitenden Satelliten (12), die gleichen Abstand voneinander haben sind und in mehreren Paaren arbeiten,
- wobei jeder der mehreren Satelliten (12) mit wenigstens einer der mehreren Relaisstationen (18) und mit wenigstens einer der mehreren Benutzerstationen (20) kommunizieren kann,
- wobei die mehreren Benutzerstationen (20) in erster Linie in bewohnten Teilen der Erde (E) zufallsverteilt sind,
**dadurch gekennzeichnet,**
- **dass** die Satelliten (12) mit gleichem Abstand voneinander in mehreren Paaren der niedrigen Erdumlaufbahnen (22) liegen und jedes der Paare von niedrigen Erdumlaufbahnen (22) eine geneigte Umlaufbahnebene (14) und eine konjugiert geneigte Umlaufbahnebene (15) enthält,
- die geneigte Umlaufbahnebene (14) und die konjugiert geneigte Umlaufbahnebene (15) jede einen ansteigenden Knoten (40a) und einen abfallenden Knoten (40b) aufweist und
- der ansteigende Knoten (40a) der geneigten Umlaufbahnebene (14) um ungefähr 180 Grad nach rechts oben von dem absteigenden Knoten (40a) der konjugiert geneigten Umlaufbahnebene (15) versetzt ist,
- und **dass** die mehreren Relaisstationen (18) auf Stellen der Erde (E) verteilt sind, die das Sendegebiet für die Kommunikation maximieren und die Zeit zum Austausch von Nachrichten und Daten zwischen zwei der mehreren Benutzerstationen (20) minimieren, dass die Relaisstationen (18) über eine Satellitenverbindung und ein öffentliches Telefonnetz miteinander kommunizieren und die Relaisstationen (18) zwischen den Verbindungen wählen können, um die Nachrichten und Daten zwischen den Benutzerstationen (20) austauschen zu können.

2. Satelliten-Kommunikationssystem nach Anspruch 1, wobei die Relaisstationen (18) außerdem zwischen alternativen Mitteln zur Weitergabe von Nachrichten und Daten entsprechend den Austauschmodi wählen können.

3. Satelliten-Kommunikationssystem nach Anspruch 1 oder 2, bei dem eine oder mehrere der Umlaufbahnebenen (14, 15) eine Höhe zwischen 100 km und 12.000 km, vorzugsweise zwischen 100 km und 1.200 km, aufweisen können, wobei die am meisten bevorzugte Anordnung eine Höhe von 950 km hat, die den besten Kompromiss zwischen dem Sendegebiet für die Benutzer und den Kosten darstellt.

4. Satelliten-Kommunikationssystem nach einem der vorangehenden Ansprüche, bei dem eine oder mehrere der Umlaufbahnebenen (14, 15) um zwischen null Grad und 180 Grad, vorzugsweise zwischen 40 Grad und 80 Grad, zum Erdäquator geneigt sein können und die am meisten bevorzugte Anordnung um 50 Grad zum Erdäquator geneigt ist, was ein ideales Systemsendegebiet für die am dichtesten bevölkerten Bereiche der Erde darstellt.

5. Satelliten-Kommunikationssystem nach einem der vorangehenden Ansprüche, bei dem eine oder mehrere aneinanderliegende Umlaufbahnebenen (14, 15) einen Phasenwinkel zwischen ihren Ebenen zwischen null Grad und 360 Grad, vorzugsweise zwischen null Grad und 45 Grad, aufweisen können und die am meisten bevorzugte Ausführung 7,5 Grad aufweist.

6. Satelliten-Kommunikationssystem nach einem der vorangehenden Ansprüche, bei dem zwischen zwei und zwölf , vorzugsweise zwischen fünf und acht, Satelliten (12) in einer Umlaufbahnebene (14, 15) liegen können und die am meisten bevorzugte Ausführungsform sechs Satelliten (12) je Umlaufbahnebene (14, 15) aufweist, was den besten Kompromiss zwischen der Effizienz des Systems und den Kosten darstellt.

7. Satelliten-Kommunikationssystem nach einem der Ansprüche 1 bis 5, bei dem zwischen zwei und zwölf Umlaufbahnebenen (14, 15), vorzugsweise zwischen vier und zehn, vorgesehen sein können und die am meisten bevorzugte Ausführungsform acht Umlaufbahnebenen (14, 15) aufweist, was die beste Sichtbarkeit des Satelliten von dem nördlichen geographischen Breiten der Erde darstellt.

8. Satelliten-Kommunikationssytem nach Anspruch 1 oder 2, bei dem
- die Anordnung (10) der Satelliten (12) achtundvierzig Satelliten (12) aufweist, die in einer Höhe von ungefähr 950 km arbeiten,
- die mehreren Paare von niedrigen Erdumlaufbahnen (22) acht der geneigten Umlaufbahnebenen (14, 15), sechs der in jeder der geneigten Umlaufbahnebenen (14, 15) arbeitenden Satelliten aufweist und
- der aufsteigende Knoten (40a) der geneigten Umlaufbahnebenen (14, 15) bei rechten Anstiegswinkeln von ungefähr 0, 45, 90, 135, 180, 225, 270 bzw. 315 Grad auftritt.

9. Satelliten-Kommunikationssystem nach einem der vorangehenden Ansprüche, wobei jeder Satellit (12) eine Kommunikations-Nutzlast (120) mit einem Computer-Untersystem mit einem Speicher aufweist, wobei das Computer-Untersystem empfangene Nachrichten und/oder Daten empfangen, in dem Speicher speichern und sie in der benötigten Form zu einer der mehreren Benutzerstationen (20) und zu einer der Relaisstationen (18) zu einer späteren Zeit weiter übertragen kann, wodurch das Satelliten-Kommunikationssystem ein Speichersystem und ein Weitergabesystem darstellt.

10. Satelliten-Kommunikationssystem nach Anspruch 9, bei dem das Computer-Untersystem außerdem Kanalzuordnungen durchführt.

11. Satelliten-Kommunikationssystem nach Anspruch 9 oder 10, bei dem
- jede Kommunikations-Nutzlast (120) eine Relais-Satelliten-Aufwärtsverbindung (48a) und eine Relais-Satelliten-Abwärtsverbindung (48b) darstellt und mit wenigstens einer der mehreren Relaisstationen (18) kommuniziert und zum Bilden einer Stations-Satelliten-Aufwärtsverbindung (50a) und einer Stations-Satelliten-Abwärtsverbindung (50b) und mit wenigstens einer der mehreren Benutzerstationen (20) kommuniziert,
- jede der mehreren Relaisstationen (18) einen Relais-Satelliten-Aufwärtssender (232), einen Relais-Satelliten-Abwärtsempfänger (234) und eine Stationsverbindung (53) mit einem sehr geringen Öffnungswinkel, im Folgenden mit VSAT bezeichnet, zur Kommunikation mit einem geostationären Kommunikationssatelliten (52) aufweist, und
- die Relais-Satelliten-Aufwärtsverbindung (48a), die Relais-Satelliten-Abwärtsverbindung (48b), die Verbindungsstation (53) mit dem sehr geringen Öffnungswinkel und die terrestrische Verbindung (51) zur Kommunikation zwischen einer der Relaisstationen (18) und einer anderen Relaisstation (18) und mit jeder der mehreren Benutzerstationen (20) dient,
- jede der mehreren Benutzerstationen (20) ein Modem (200) für die Übertragung der Nachricht über die Stations-Satelliten-Auwärtsverbindung (50a) zu einem der mehreren Kommunikationssatelliten (12) aufweist und
- die Nachricht an Bord des Satelliten (12) gespeichert und über die Kombination der Stations-Satelliten-Aufwärtsverbindung (50a) zu dieser Bestimmung weitergegeben wird, und die Relais-Stations-Satellitenverbindungen (48a, 48b), die Stations-Satelliten-Abwärtsverbindung (50b), die terrestrische Strecke (51) und/oder die VSAT-Verbindung (53) die für die Weitergabe der Nachricht benötigte Zeit minimieren.

12. Satelliten-Kommunikationssystem nach Anspruch 11, bei dem die Stations-Satelliten-Aufwärtsverbindung (48a), die Stations-Satelliten-Abwärtsverbindung (48b), die Relais-Satelliten-Aufwärtsverbindung (50a) und die Relais-Satelliten-Abwärtsverbindung (50b) bei Hochfrequenzen arbeiten, die sprachlosen, nicht-geostationären mobilen Satellitensystemen zugeordnet sind.

13. Satelliten-Kommunikationssystem nach Anspruch 11 oder 12, bei dem die Kommunikations-Nutzlast (120) Folgendes enthält:
- ein dynamisches, adaptives Kanalzuordnungssystem an Bord jedes der mehreren Satelliten (12) zum Überwachen eines auf der Stations-Satelliten-Aufwärtsver-bindung (50a) bei Hochfrequenz übertragenen Eingangsbandsignals (125) und zum Zuordnen nicht belegter Frequenzkanäle zu jeder der mehreren Benutzerstationen (20),
- wobei das adaptive Kanal-Zuordnungssystem einen Ausgang mit mehreren, schnell gewonnen Signal-Ausgangsvektoren (140) aufweist, die aus einer mittleren Leistungsabschätzung entsprechend Signalen auf Segmenten des Eingangsbandsignals (125), und die Signal-Ausgangsvektoren (140) Informationen über derzeit nicht belegte Frequenzkanäle enthalten.

14. Satelliten-Kommmunikationssystem nach Anspruch 13, bei dem das dynamische, adaptive Kanal-Zuordnungssystem Folgendes enthält:
- einen Band-Abtast-Empfäner (121), der die Signal-Ausgangsvektoren (140) aus dem Eingangsbandsignal (125) für den Eingang zu einem Basisband-Abtastbereich (123) erzeugt, wobei der Basisband-Abtastbereich (123) folgende Komponenten enthält:
- ein HF-Bandpassfilter (124) zur Verringerung von außerhalb des Bandes liegenden Interferenzen,
- einen HF-Verstärker (126) zum Verstärken eines Ausgangssignals von dem Bandpassfilter (124),
- eine Teilerschaltung (128) zum gleichmäßigen Teilen eines Ausgangssignals von dem HF-Verstärker (126) in ein erstes und ein zweites Ausgangssignal,
- einen Hochfrequenzoszillator (129),
- einen 90°-Phasendreher (132),
- einen ersten Mischer (130) zum Umsetzen des ersten Ausgangssignals der Teilerschaltung (128) in ein erstes Basisbandsignal (I) mit einem Überlagerungssignal von dem Hochfrequenzoszillator (129),
- einen zweiten Mischer (130) zum Umsetzen des zweiten Ausgangssignals der Teilerschaltung (128) in ein zweites Basisbandsignal (Q) mit einem Signal von dem Hochfrequenzoszillator (129), das durch den 90°-Phasendreher (132) um 90° in der Phase verschoben ist,
- mehrere Tiefpassfilter (134) zur Vermeidung eines Aliasing des ersten Basisbandsignals (I) und des zweiten Basisbandsignals (Q),
- mehrere Analog/Digital-Konverter (129) zum Umsetzen des ersten Basisbandsignals (I) in einen ersten digitalen Signalabtastwert (I(n)) und zum Umsetzen des zweiten Basisbandsignals (Q) in einen zweiten digitalen Signalabtastwert (Q(n)) und
- einen digitalen Signalprozessor (138) zum Erzeugen der Ausgangssignal-Vektoren (140) aus den Eingängen der ersten digitalen Signalabtastwerte (I(n)) und der zweiten digitalen Signalabtastwerte (Q(n)),
- wobei die Komponenten (124, 126, 128, 129, 130, 132, 134, 136, 138) des Basisband-Abtastbereichs (123) zusammenarbeiten und eine mittlere Leistungsabschätzung für Teile des Bandes von Hochfrequenzen (125) und den Ausgangssignal-Vektor (140) erzeugen.

15. Satelliten-Kommunikationssystem nach einem der Ansprüche 11 bis 14, bei dem die Benutzerstation (20) zum Übertragen und zum Berichten der Lage eines sich bewegenden Objekts und der Umgebung dienen und das System außerdem Folgendes enthält:
- ein Modul (210) für ein globales Positioniersystem, im Folgenden mit GPS (global positioning system) bezeichnet, und
- eine Umgebungs-Messgeräteanordnung (256),
- wobei das GPS-Modul (210) und die Umgebungs-Messgeräteanordnung (256) mit dem Modem (200) verbunden sind und geographische Lageinformationen und Umgebungsdaten liefern, die dann als digitale Daten über diese Kombination der Stations-Satelliten-Aufwärtsverbindung (50a), die Relais-Stations-Satellitenverbindungen (48a, 48b), die Stations-Satelliten-Abwärtsverbindung (50b), die VSAT-Verbindung (53) und/oder die terrestrische Verbindung (51) als digitale Daten zu einer Empfangsgruppe übertragen werden, um die Zeit für die Weitergabe dieser digitalen Daten zu der Empfangsgruppe zu minimieren.

16. Satelliten-Kommunikationssystem nach einem der Ansprüche 11 bis 15, bei dem die Benutzerstation (20) zur Überwachung der Daten von den Systemen, von tragbaren Geräten und Geräten mit einer niedrigen Datenrate innerhalb eines Aufbaus (292) dienen, der das Hochfrequenzsignal eines Benutzers von dem Satelliten (12) abschirmt, ferner enthaltend:
- eine Daten-Eingabeeinheit (291) zum Liefern von digitalen Geschäfts- und/oder Fertigungsinformationen,
- einen persönlichen Kommunikationsservice, im Folgenden mit PCS (personal communication service) bezeichnet, in dem Aufbau (292),
- eine Kopplungseinheit (296),
- eine Dateneingabeeinheit (291), die über die Kopplungseinheit (296) mit einem Eingang des PCS-Systems (294) verbunden ist,
- wobei das PCS-System (294) mit einem Ausgang des Modems (200) der Benutzerstation (20) verbunden ist, und
- die Geschäfts- und/oder Fertigungsinformationen von der Dateneingabeeinheit (291) über das PCS-System zu dem Modem (200) übertragen werden, für eine Übertragung durch die Benutzerstation (20) zu einer Empfangsgruppe über diese Kombination der Stations-Satelliten-Aufwärtsver-bindung (50a), die Relais-Stations-Satellitenverbindungen (48a, 48b), die Stations-Satelliten-Abwärtsverbindung (50b), die VSAT-Verbindung (53) und/oder die terrestrische Verbindung (51), um die Zeit für die Weitergabe der digitalen Daten zu der Empfangsgruppe zu minimieren.

17. Satelliten-Kommunikationssystem nach einem der Ansprüche 11 bis 15 für ein interaktives Fernsehsystem (260), das mit einer durch eine Sendestation gelieferten direkten Fernsehprogrammbildung arbeitet, ferner enthaltend:
- ein Antennensystem (265), enthaltend
- eine kleine Fernseh-Schüsselantenne (264) für den Empfang eines Fernseh-Satellitensignals (261) und eine Peitschenantenne (262) für die Kommunikation mit den Kommunikationssatelliten (12),
- einen mit dem Modem (200) verbundenen Fernsehkonverter (266),
- einen Fernsehempfänger (272) für die Wiedergabe des Fernseh-Satellitensignals für einen Benutzer,
- eine Dateneingabeeinheit (268),
- wobei der Benutzer interaktive Antworten über die Dateneingabeeinheit (268) in die Fernsehsendestation eingeben kann, und
- wobei die Antworten durch die Benutzerstation (20) zu einem der Kommunikationssatelliten (12) für die Weitergabe zu der Sendestation über die Kombination der Stations-Satelliten-Aufwärtsverbindung (50a), der Relais-Stations-Satellitenverbindung (48a, 48b), der Stations-Satelliten-Abwärtsverbindung (50b), der VSAT-Verbindung (53) und/oder der terrestrischen Verbindung (51) übertragen werden, um die Zeit für die Weitergabe der digitalen Daten zu der Empfangsgruppe zu minimieren.

18. Satelliten-Kommunikationssystem nach einem der Ansprüche 11 bis 15, bei dem die Benutzerstation (20) für die Überwachung der Funkton einer Straßenbeleuchtung (310) vorgesehen ist.

19. Satelliten-Kommunikationssystem nach einem der Ansprüche 11 bis 15, bei dem die Benutzerstation (20) zur Überwachung der Funktion eines Warenautomaten (314) vorgesehen ist.

20. Satelliten-Kommunikationssystem nach einem der Ansprüche 11 bis 15, bei dem die Benutzerstation (20) für die Überwachung des Inhalts einer Kurier-Servicestation und/oder eines Briefkastens (312) vorgesehen ist.

21. Satelliten-Kommunikationssystem nach einem der Ansprüche 11 bis 15, bei dem die Benutzerstation (20) zur Überwachung der Funktion von Flugsicherungs-Warnleuchten auf großen Gebäuden und/oder Gefahraufbauten (316) einschließlich Strommasten, Rundfunk- oder Fernsehtürmen vorgesehen ist.

22. Satelliten-Kommunikationssystem nach einem der vorangehenden Ansprüche, bei dem jeder der Kommunikationssatelliten (12) in Umlaufbahnen arbeitet, die vorzugsweise elliptische Umlaufbahnen oder elliptische Umlaufbahnen mit verschiedenen Brennweiten und die am meisten bevorzugten runde Umlaufbahnen sind, die die geringsten Leistungsanforderungen für die Sender der Benutzerstation erfordern.

23. Verfahren zur Durchführung von Kommunikationen mit einem Satelliten-Kommunikationssystem, enthaltend folgende Schritte:
- Installation einer Anordnung (10) mit mehreren Kommunikationssatelliten (12) in mehreren Erdumlaufbahnebenen:
- Verteilung mehrerer Benutzerstationen (20) über die Erde (E),
- Verteilung mehrerer Relaisstationen (18) an Stellen auf der Erde (E) zur Erleichterung der Weitergabe einer Nachricht zwischen einer der mehreren Benutzerstationen (20) und/oder der Anordnung von Kommunikationssatelliten (12) und einem Bestimmungsort,
- wobei jeder der mehreren Satelliten (12) mit wenigstens einer der mehreren Relaisstationen (18) und mit wenigstens einer der mehreren Benutzerstationen (20) kommunizieren kann,
**dadurch gekennzeichnet,**
**dass** die Satelliten bei einer Höhe zwischen 100 km und 1.200 km stationiert werden,
- die Umlaufbahnebenen vier Paare von geneigten Umlaufbahnebenen enthalten,
- jedes Paar eine geneigte Umlaufbahnebene (14) und eine konjugiert geneigte Umlaufbahnebene (15) enthält, die geneigte Umlaufbahnebene (14) und die konjugiert geneigte Ebene (15) jede einen aufsteigenden Knoten (40a) und einen absteigenden Knoten (40b) enthalten, und
- der aufsteigende Knoten (40a) der geneigten Umlaufbahnebene (14) um ungefähr 180 Grad nach rechts von dem aufsteigenden Knoten (40a) der konjugiert geneigten Ebene (15) versetzt ist, wodurch die aufsteigenden Modi der acht geneigten Umlaufbahnebenen bei nach rechts ansteigenden Winkeln von ungefähr 0, 45, 90, 135, 180, 225, 270 bzw. 315 Grad auftreten,
- und **dass** eine terrestrische Verbindung (51) vorgesehen wird und wenigstens zwei der mehreren Relaisstationen (18) mit der terrestrischen Verbindung (51) verbunden werden, und die Relaisstationen (18) über eine Satellitenverbindung miteinander kommunizieren und die Relaisstationen (18) zwischen den terrestrischen und Satelliten-Verbindungen wählen können, um die Nachricht zwischen den Benutzerstationen (20) weiterzugeben.

24. Verfahren nach Anspruch 23, bei dem der Schritt des Bildens einer terrestrischen Verbindung (51) folgenden Schritt enthält:
Verbinden von wenigstens zwei der mehreren Relaisstationen (18) mit einem öffentlichen Telefonnetz, im Folgenden mit PSTN (publicity switched telephone network) bezeichnet.

25. Verfahren nach Anspruch 23 oder 24, bei dem der Schritt der Stationierung einer Anordnung (10) von Kommunikationssatelliten (12) folgende Schritte enthält:
- jeder der mehreren Satelliten (12) erhält eine Kommunikations-Nutzlast (120) zur Bildung einer Relais-Satelliten-Aufwärtsverbindung (48a) und einer Relais-Satelliten-Abwärtsverbindung (48b) zur Kommunikation mit wenigsten einer der mehreren Relaisstationen (18),
- Ausbildung jeder der mehreren Satelliten (12) mit einer Kommunikations-Nutzlast (120) zur Bildung einer Stations-Satelliten-Abwärtsverbindung (50b) und einer Stations-Satelliten-Aufwärtsverbindung (50a) zur Kommunikation mit wenigstens einer der mehreren Benutzerstationen (20),
- Ausbildung jeder der mehreren Relaisstationen (18) mit einem Relais-Satelliten-Aufwärtssender (232), einem Relais-Satelliten-Abwärtsempfänger (234), einer Verbindungsstation (53) mit einem sehr kleinen Öffnungswinkel (VSAT) zur Kommunikation mit einem geostationären Kommunikationssatelliten (52) und einer Schnittstelle für eine terrestrische Verbindung (51) und
- Anwendung der Relais-Satelliten-Aufwärtsverbindung (48a), der Relay-Satelliten-Abwärtsverbindung (48b), der Stationsverbindung (53) mit sehr geringem Öffnungswinkel und der terrestrischen Verbindung (51) für die Kommunikation zwischen einer der Relaisstationen (18) und/oder einer anderen der Relaisstationen (18) und mit den Benutzerstationen (20).

26. Verfahren nach Anspruch 25, enthaltend folgende Schritte:
- Kommunizieren der Nachricht von einer der mehreren Benutzerstationen (20) mit einem Modem (200) über die Stations-Satelliten-Aufwärtsverbindung (50a) mit einem der mehreren Satelliten (12),
- Speichern der Nachricht an Bord des Satelliten (12) und
- Weitergabe der Nachricht zu dem Bestimmungsort über eine derartige Kombination der Relais-Stations-Satelliten-Verbindungen (48a, 48b), der Stations-Satelliten-Abwärtsverbindung (50b), der terrestrischen Verbindung (51) und der VSAT-Verbindung (53), um die für die Weitergabe einer Nachricht benötigte Zeit zu minimieren.

27. Verfahren nach Anspruch 25 oder 26, enthaltend folgende Schritte:
- Überwachung, der Eingangsbandsignale (125), die über die Stations-Satelliten-Aufwärtsverbindung (50a) bei Hochfrequenz übertragen werden,
- Ableitung eines Ausgangssignals von mehreren schnell erhaltenen Signal-Ausgangsvektoren (140) von einer Schätzung der mittleren Leistung entsprechend Eingangsbandsignalen (125), die mit einem dynamischen, adaptiven Kanalzuordnungssystem überwacht werden, an Bord jedes der mehreren Satelliten (12), wobei die Signal-Ausgangsvektoren (140) Informationen über derzeit unbelegte Frequenzkanäle enthalten, und
- Zuordnung unbelegter Frequenzkanäle zu jeder der mehreren Benutzerstationen (20) mit dem adaptiven Kanal-Zuordnungssystem.

28. Verfahren nach einem der Ansprüche 25 bis 27, bei dem der Schritt für die Verteilung mehrerer Benutzerstationen (20) folgende Schritte enthält:
- Stationierung einer Boje (252) in einem maritimen Bereich,
- wobei die Boje (252) eine Umgebungs- und Wetter-Messgerätanordnung (256) zum Sammeln von Umgebungsdaten enthält, und/oder
- ein Unterwasser-Horchgerät (254) zur Aufnahme von Schiffsbewegungsdaten und/oder
- eine Lagebestimmungs-Einheit (LORAN, GPS) zur Aufnahme von Lagedaten und
- eine der mehreren Benutzerstationen (20) zum Übertragen der Umgebungs-Anpass- und/oder Positionierungsdaten über eine derartige Kombination der Stations-Satelliten-Aufwärtsverbindung (50a), der Relais-Station-Satelliten-Verbindungen (48a, 48b), der Stations-Satelliten-Abwärtsverbindung (50b), der VSAT-Verbindung (53) und der terrestrischen Verbindung (51) zur Minimierung der für die Weitergabe der Daten benötigten Zeit enthält.

29. Verfahren nach einem der Ansprüche 25 bis 27 bei dem der Schritt der Verteilung der mehreren Benutzerstationen (20) folgende Schritte enthält:
- Bereitstellung eines Antennensystems (256) auf der Seite eines Fernsehzuschauers,
- wobei das Antennensystem (256) eine erste Empfangsantenne (264) zum Empfang von Rundfunk-Fernsehsignalen (261) aufweist, die von einer Sendestation von einem Satelliten (282) mit Direktsendung geliefert werden, und mit einer zweiten Antenne (262) zur Kommunikation mit einem Satelliten (12) der Anordnung (10),
- Bereitstellung eines Fernseh-Konverter/Tuners (266) mit einem Modem (200), wobei der Fernseh-Konverter/Tuner (266) mit dem Antennensystem (265) verbunden ist,
- Anschluss einer Eingabeeinheit (268) zur Eingabe von Daten und eines Fernseh-empfängers (272) für die Wiedergabe der Fernsehsignale (261) an den Fernseh-Konverter/Tuner (266), und
- wobei der Fernsehzuschauer Antworten zu dem auf dem Fernsehempfän-ger (272) wiedergegebenen Rundfunk-Fernsehsignalen (261) durch Eingabe dieser Antworten auf der Daten-Eingabeeinheit (268) und Übertragung der Antworten über eine derartige Kombination der Stations-Satelliten-Aufwärtsverbindung (50a), der Relais-Stations-Satelliten-Verbindungen (48a, 48b), der Stations-Satelliten-Abwärtsverbindung (50b), der VSAT-Verbindung (53) und der terrestrischen Verbindung (51) zu der Sendestation sendet, um die für die Weitergabe der Daten benötigte Zeit zu minimieren.

30. Verfahren nach einem der Ansprüche 25 bis 27, bei dem der Schritt der Verteilung mehrerer Benutzerstationen (20) folgende Schritte enthält:
- Bildung von Kommunikationen zu einer oder mehreren der Satelliten (12) in der Anordnung von Kommunikationssatelliten (10) von tragbaren Einheiten (291), die von über Satelliten (12) gesendeten und empfangenen Hochfrequenzsignalen (50a, 50b) durch einen künstlichen oder natürlichen Aufbau (292) abgeschirmt sind, indem Daten von den tragbaren Einheiten (291) über ein persönliches Kommunikationssystem (294) zu einer in der Nähe gelegenen Benutzerstation (298) übertragen werden, die mit wenigstens einem der mehreren Satelliten (12) kommuniziert.

31. Verfahren nach einem der Ansprüche 25 bis 27, bei dem der Schritt der zufallsmäßigen Verteilung mehrerer Benutzerstationen (20) folgende Schritte enthält:
- Anschluss einer der mehreren Benutzerstationen (20) an einen Takt in einem örtlichen Taktsystem, wobei das örtliche Taktsystem den Universal Coordinated Time (UTC)-Signalen entspricht,
- Gewinnung der Universal Coordinated Time, im Folgenden mit UTC bezeichnet-Signale, die durch das National Bureau of Standards über eine Kommunikationsverbindung (50a, 51) geliefert werden,
- Senden der Universal Coordinated Time (UTC)-Signale über die Satelliten (12) in der Anordnung (10),
- Empfangen der Universal Coordinated Time (UTC)-Signale bei einer der mehreren Benutzerstationen (20),
- Weiterleiten der Universal Coordinated Time (UTC)-Signale zu dem örtlichen Taktsystem und
- Synchronisierung des Taktes in dem örtlichen Taktsystem auf die Universal Coordinated Time (UTC)-Signale.

32. Verfahren nach einem der Ansprüche 25 bis 27, bei dem der Schritt der Verteilung mehrerer Benutzerstationen (20) folgende Schritte enthält:
- Anschluss einer Benutzerstation (20) an eine mit einem entfernt angeordneten System verbundene Überwachungseinheit,
- wobei die Überwachungseinheit ein Signal, das die einwandfreie Funktion des entfernt angeordneten Systems anzeigt, zu einer der mehreren Benutzerstationen (20) liefert,
- Überwachung der einwandfreien Funktion des entfernt angeordneten Systems mit der Überwachungseinheit und
- Übertragung des Signals über diese Kombination der Stations-Satelliten-Aufwärtsverbindung (50a), der Relais-Satelliten-Verbindungen (48a, 48b), der Stations-Satelliten-Abwärtsverbindung (50b), der VSAT-Verbindung (53) und/oder der terrestrischen Verbindung (51) zur Minimierung der für die Weitergabe der Daten benötigten Zeit.

33. Verfahren nach einem der Ansprüche 25 bis 27, enthaltend folgende Schritte:
- Bildung von Geschäftsmarkt-Informationen in Echtzeit über eine oder mehrere Kommunikationsverbindungen (50a, 51),
- Senden der Geschäftsmarkt-Informationen über die Satelliten (12) in der Anordnung (10) und
- Empfang der Geschäftsmarkt-Informationen bei einer oder mehreren der Benutzerstationen (20) für die Anwendung in geschäftlichen Transaktionen.

34. Verfahren nach einem der Ansprüche 25 bis 27, enthaltend folgende Schritte:
- Betreiben der Stations-Satelliten-Aufwärtsverbindung (50a), der Stations-Satelliten-Abwärtsverbindung (50b), der Relais-Satelliten-Aufwärtsverbindung (48a) und der Relais-Satelliten-Abwärtsverbindung (48b) bei Hochfrequenzen, die sprachlosen, nicht-geostationären, mobilen Satellitensystemen zugeordnet sind.

35. Verfahren nach einem der Ansprüche 25 bis 27 für die Übermittlung und Berichtung der Lage und der Umgebung eines sich bewegenden Objekts, enthaltend folgende Schritte:
- Einsatz eines Moduls (210) für ein globales Positionierungssystem (GPS = global positioning system),
- Einsatz einer Messgeräteanordnung (256) für die Umgebung,
- Anschluss des GPS-Moduls (210) und der Messgeräteanordnung (256) für die Umgebung an das Modem (200) und Liefern von geographischen Lageinformationen und Umgebungsdaten an die Benutzerstation (20) über das Modem (200) und
- Übertragen der Informationen als digitale Daten zu einer Empfangsgruppe über diese Kombination der Relais-Stations-Satelliten-Verbindungen (48a, 48b), der Stations-Satelliten-Abwärtsverbindung (50b), der VSAT-Verbindung (53) und der terrestrischen Verbindung (51) zur Minimierung der für die Weitergabe der Daten benötigten Zeit.

36. Verfahren nach einem der Ansprüche 25 bis 27 zur Überwachung von Daten von den Systemen, tragbaren Einheiten und/oder Einheiten mit einer niedrigen Datenrate in einem Aufbau (292), der das Hochfrequenzsignal eines Benutzers von den Satelliten (12) abschirmt, enthaltend die folgenden Schritte:
- Liefern von Geschäfts- und/oder Fertigungsinformationen mit einer Daten-Eingabeeinheit (291),
- Bildung eines Systems (294) für einen persönlichen Kommunikationsdienst, im Folgenden mit PCS (personal communication service) bezeichnet, das in dem Aufbau (292) enthalten ist,
- Anschluss der Dateneingabeeinheit an einen Eingang des PCS-Service mit einer Anschlusseinheit (296),
- Anschluss des PCS-Systems (294) an einen Ausgang des Modem (200) der Benutzerstation (20) und
- Übertragung der Geschäfts- und/oder Fertigungsinformationen von der Dateneingabeeinheit (291) über das PCS-System zu dem Modem (200) und
- Übertragung der Geschäfts- und/oder Fertigungsinformationen mit der Benutzerstation (20) zu einer Empfangsgruppe über eine derartige Kombination der Stations-Satelliten-Aufwärtsverbindung (50a), der Relais-Stations-Satelliten-Verbindung (48a, 48b), der Stations-Satelliten-Abwärtsverbin-dung (50b), der VSAT-Verbindung (53) und/oder der terrestrischen Verbindung (51) zur Minimierung der für die Weitergabe der Daten benötigten Zeit.

37. Verfahren nach Anspruch 36, bei dem der Schritt der Bereitstellung der Geschäfts- und/oder Fertigungsinformationen mit einer Dateneingabeein-heit (291) das Überwachen der Daten von einer entfernt angeordneten Vorrichtung für einen Ausfall und/oder eine notwendige Reparatur einschließt.

38. Verfahren nach Anspruch 32 oder 37, bei dem der Schritt der Überwachung der Daten von einer entfernt angeordneten Vorrichtung für einen Ausfall und/oder eine notwendige Reparatur eine Überwachung der Funktion einer Straßenbeleuchtung (310) einschließt.

39. Verfahren nach Anspruch 32 oder 37, bei dem der Schritt der Überwachung der Daten von der entfernt angeordneten Vorrichtung für einen Ausfall und/oder eine notwendige Reparatur die Überwachung der Funktion eines Warenautomaten (314) einschließt.

40. Verfahren nach Anspruch 32 oder 37, bei dem der Schritt der Überwachung der Daten von einer entfernt angeordneten Vorrichtung für den Ausfall und/oder eine notwendige Reparatur die Überwachung des Inhalts einer Kurier-Servicestelle und/oder eines Briefkastens (312) einschließt.

41. Verfahren nach Anspruch 32 oder 37, bei dem der Schritt der Überwachung der Daten von der entfernt angeordneten Vorrichtung für den Ausfall und/oder eine notwendige Reparatur die Überwachung der Funktion von Flugsicherungs-Warnleuchten auf großen Gebäuden und/oder gefährlichen Aufbauten (316), einschließlich Strommasten, Rundfunk- oder Fernsehtürme einschließt.

42. Verfahren nach einem der Ansprüche 25 bis 27 für ein interaktives Fernsehsystem (260), das mit einem durch einen Sender gelieferten direktem Fernsehprogramm arbeitet, enthaltend folgende Schritte:
Einsatz eines Antennensystems (265), enthaltend
- eine kleine Fernseh-Schüsselantenne (264) zum Empfang eines Fernseh-Satellitensignals (261) und eine Peitschenantenne (262) zur Kommunikation mit den Telekommunikationssystem-Satelliten (12),
- Anschluss eines Fernsehkonverters (266) an das Modem (200),
- Wiedergabe des Fernseh-Satellitensignals für einen Benutzer auf einem Fernsehempfänger (272),
- Anschluss einer Dateneingabeeinheit (268) an das Modem (200),
- Eingabe von interaktiven Antworten eines Benutzers auf der Fernsehwiedergabeeinheit in die Dateneingabeeinheit (268), die darin die Antworten in digitale Daten umsetzt und diese digitalen Daten in das Modem (200) eingibt, und
- Übertragung der Antworten in das Modem (200) von der Benutzerstation (20) zu einem der Satelliten (12) mit optimalem Sendegebiet zum Liefern des Senders über eine derartige Kombination der Anschluss-Satelliten-Aufwärtsverbindung (50a), der Relais-Stations-Satelliten-Verbindungen (48a, 48b), der Anschluss-Satelliten-Abwärtsverbindung (50b), der VSAT-Verbindung (53) und der terrestrischen Verbindung (51) zur Minimierung der für die Weitergabe der Daten benötigten Zeit.

43. Verfahren nach einem der Ansprüche 25 bis 27 für die Synchronisierung von weltweiten Takten, enthaltend folgende Schritte:
- Überwachung von Coordinated Universal Time (UTC)-Signalen und anderen Zeitstandard-Daten von dem National Bureau of Standards, die über Kurzwellensendestationen WWV gesendet werden, die durch eine der mehreren Satelliten (12) in der Anordnung (10) empfangen werden, und über die Stations-Satelliten-Abwärtsverbindung (50b) zu der Benutzerstation (20) übertragen werden,
- Dekodierung der Signale an dem Modem (200) in der Benutzerstation (20),
- Lieferung der dekodierten Signale zu einem mit dem Modem (200) verbundenen Takt und Synchronisierung des Taktes mit dem UTC.

44. Verfahren nach Anspruch 23, wobei jeder Satellit mit einer Kommunikations-Nutzlast (120) versehen ist, die ein Computer-Untersystem mit einem Speicher aufweist, wobei das Computer-Untersystem empfangene Nachrichten und/oder Daten verarbeitet, diese in dem Speicher speichert und sie in der erforderlichen Weise zu einer der mehreren Benutzerstationen (20) und zu einer späteren Zeit zu einer der Relaisstationen (18) weiter übertragen kann, wodurch das Satelliten-Kommunikationssystem ein Speicher- und ein Weitergabesystem darstellt.

45. Verfahren nach Anspruch 44, wobei das Computer-Untersystem auch Kanalzuordnungen durchführt.

46. Verfahren nach Anspruch 44 oder 45, bei dem der Schritt der Stationierung einer Anordnung (10) von Kommunikationssatelliten (12) folgende Schritte enthält:
- Stationierung von achtundvierzig Satelliten (12) in den mehreren Paaren von geneigten Umlaufbahnebenen (22), enthaltend acht runde Umlaufbahn-ebenen (14, 15), sechs Satelliten (12), die in jeder der acht runden Umlaufbahnebenen (14, 15) bei einer Höhe von ungefähr 950 km arbeiten.

## Revendications

1. Système de communication par satellite comprenant:
une pluralité de stations relais (18) ;
une pluralité de terminaux d'utilisateur (20) ;
une constellation (10) de satellites (12) opérant en orbites terrestres basses ; régulièrement répartis et opérant en une pluralité de paires ;
chaque satellite de ladite pluralité de satellites (12) pouvant communiquer avec au moins une station relais de ladite pluralité de stations relais (18) et avec au moins un terminal d'utilisateur de ladite pluralité de terminaux d'utilisateur (20) ;
ladite pluralité de terminaux d'utilisateur (20) étant répartie de manière aléatoire, principalement dans des parties de la terre (E) qui sont inhabitées ;
caractérisé en ce que:
lesdits satellites (12) sont situés de manière régulièrement espacée en une pluralité de paires de plans d'orbite terrestre basse (22) ; chacune desdites paires de plans d'orbite terrestre basse (22) comprenant un plan orbital incliné (14) et un plan orbital incliné conjugué (15) ;
ledit plan orbital incliné (14) et ledit plan incliné conjugué (15) comprenant chacun un noeud ascendant (40a) et un noeud descendant (40b) ; et
ledit noeud ascendant (40a) dudit plan orbital incliné (14) étant décalé de 180 degrés approximativement d'ascension droite par rapport audit noeud ascendant (40a) dudit plan orbital incliné conjugué (15) ;
et en ce que ladite pluralité de stations relais (18) est répartie en des emplacements sur la terre (E) de manière à maximiser la couverture de communication et à minimiser le temps de transmission des messages et données entre deux terminaux d'utilisateur quelconques de ladite pluralité de terminaux d'utilisateur (20) ; lesdites stations relais (18) pouvant communiquer les unes les autres avec chaque autre par l'intermédiaire d'une liaison par satellite et d'une liaison de réseau téléphonique commuté public, lesdites stations relais (18) pouvant assurer une sélection entre lesdites liaisons afin de transmettre lesdits messages et données entre lesdits terminaux d'utilisateur (20).

2. Système de communication par satellite selon la revendication 1, dans lequel lesdites stations relais (18) permettent, en outre, de faire une sélection entre des variantes de moyens afin de transmettre des messages et données en fonction de niveaux de mode de distribution.

3. Système de communication par satellite selon la revendication 1 ou 2, dans lequel un ou plusieurs desdits plans orbitaux (14, 15) peuvent être placés entre 100 km et 12000 km d'altitude, de préférence entre 100 km et 1200 km, le mode de réalisation préféré étant à 950 km d'altitude ce qui assure le meilleur compromis entre la couverture du système pour les utilisateurs et le coût.

4. Système de communication par satellite selon l'une quelconque des revendications précédentes, dans lequel un ou plusieurs desdits plans orbitaux (14, 15) peuvent être inclinés entre zéro degré et 180 degrés par rapport à l'équateur terrestre, de préférence entre 40 degrés et 80 degrés, le mode de réalisation préféré étant incliné à 50 degrés par rapport à l'équateur terrestre ce qui assure une couverture de système idéale pour les latitudes à plus forte population de la Terre.

5. Système de communication par satellite selon l'une quelconque des revendications précédentes, dans lequel un ou plusieurs desdits plans orbitaux adjacents (14, 15) peuvent présenter un déphasage inter-plan entre zéro degré et 360 degrés, de préférence entre zéro degré et 45 degrés, le mode de réalisation préféré étant de 7,5 degrés.

6. Système de communication par satellite selon l'une quelconque des revendications précédentes, dans lequel entre deux et douze satellites (12) peuvent être placés dans un plan orbital (14, 15), de préférence entre cinq et huit, le meilleur mode de réalisation préféré comprenant six satellites (12) par plan orbital (14, 15), ce qui assure le compromis entre l'efficacité du système et le coût.

7. Système de communication par satellite selon l'une quelconque des revendications 1 à 5, dans lequel il peut exister entre deux et douze plans orbitaux (14, 15), de préférence entre quatre et dix, le mode de réalisation préféré comprenant huit plans orbitaux (14, 15) ce qui assure la meilleure visibilité du satellite par rapport aux latitudes les plus nordiques de la Terre.

8. Système de communication par satellite selon la revendication 1 ou 2, dans lequel:
ladite constellation (10) de satellites (12) comprend quarante-huit satellites (12) opérant à 950 km d'altitude approximativement ;
ladite pluralité de paires de plans d'orbite terrestre basse (22) comprend huit desdits plans orbitaux inclinés (14, 15), six desdits satellites (12) opérant sur chacun desdits plans orbitaux inclinés (14, 15) ; et
ledit noeud ascendant (40a) desdits plans orbitaux inclinés (14, 15) se trouve à des angles d'ascension droite respectivement de 0, 45, 90, 135, 180, 225, 270 et 315 degrés approximativement.

9. Système de communication par satellite selon l'une quelconque des revendications précédentes, dans lequel chaque satellite (12) comprend une charge utile de communication (120) avec un sous-système informatique comportant une mémoire, dans lequel le sous-système informatique permet de traiter des messages et/ou données reçues, de les mémoriser dans ladite mémoire et de les retransmettre tels quels plus tard à un terminal d'utilisateur quelconque de ladite pluralité de terminaux d'utilisateur (20) et à une station relais quelconque desdites stations relais (18), de telle sorte que le système de communication pas satellite constitue un système de mémorisation et de transmission.

10. Système de communication par satellite selon la revendication 9, dans lequel le sous-système informatique réalise aussi des affectations de canaux.

11. Système de communication par satellite selon la revendication 9 ou 10, dans lequel:
chaque charge utile de communication (120) permet d'établir une liaison ascendante relais-satellite (48a) et une liaison descendante relais-satellite (48b) et communique avec au moins une station relais de ladite pluralité de stations relais (18), et d'établir une liaison ascendante terminal-satellite (50a) et une liaison descendante terminal-satellite (50b) et communique avec au moins un terminal d'utilisateur de ladite pluralité de terminaux d'utilisateur (20) ;
chaque station relais de ladite pluralité de stations relais (18) comprend un émetteur de liaison ascendante relais-satellite (232), un récepteur de liaison descendante relais-satellite (234) et une liaison de terminal à très faible largeur de faisceau, désignée ci-après VSAT, (53) afin de communiquer avec un satellite de communication géostationnaire (52) ;
ladite liaison ascendante relais-satellite (48a), ladite liaison descendante relais-satellite (48b), ladite liaison de terminal à très faible largeur de faisceau (53) et ladite liaison terrestre (51) étant utilisées pour assurer les communications entre une station relais (18) et une autre station relais (18) et avec chaque terminal d'utilisateur de ladite pluralité de terminaux d'utilisateur (20) ;
chaque terminal d'utilisateur de ladite pluralité de terminaux d'utilisateur (20) comporte un modem (200) destiné à communiquer ledit message par l'intermédiaire de ladite liaison ascendante terminal-satellite (50a) vers un satellite de communication de ladite pluralité de satellites de communication (12) ; et
ledit message est mémorisé à bord dudit satellite (12) et transmis à ladite destination par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison terrestre (51) et/ou de ladite liaison VSAT (53) afin de minimiser la durée requise pour transmettre ledit message.

12. Système de communication par satellite selon la revendication 11, dans lequel ladite liaison ascendante terminal-satellite (48a), ladite liaison descendante terminal-satellite (48b), ladite liaison ascendante relais-satellite (50a) et ladite liaison descendante relais-satellite (50b) fonctionnent à des fréquences radio affectées aux systèmes de satellites mobiles, non vocaux, non géosynchrones.

13. Système de communication par satellite selon la revendication 11 ou 12, dans lequel ladite charge utile de communication (120) comprend:
un système d'affectation dynamique de canal adaptatif, à bord de chaque satellite de ladite pluralité de satellites (12), afin de contrôler un signal de bande d'entrée (125) appliqué sur ladite liaison ascendante terminal-satellite (50a) à une fréquence radio et à affecter des canaux de fréquence inoccupés à chaque terminal d'utilisateur de ladite pluralité de terminaux d'utilisateur (20) ;
ledit système d'affectation de canal adaptatif comprenant une sortie d'une pluralité de vecteurs de sortie de signal obtenus rapidement (140) élaborés à partir d'une estimation de puissance moyenne correspondant à des signaux sur des segments dudit signal de bande d'entrée (125) ; lesdits vecteurs de sortie de signal (140) contenant des informations sur des canaux de fréquence couramment inoccupés.

14. Système de communication par satellite selon la revendication 13, dans lequel ledit système d'affectation de canal dynamique adaptatif comprend:
un récepteur d'échantillonnage de bande (121) qui produit lesdits vecteurs de sortie de signal (140) à partir dudit signal de bande d'entrée (125) entré sur une section d'échantillonnage de bande de base (123) ; ladite section d'échantillonnage de bande de base (123) comportant comme composants :
un filtre passe-bande RF (124) destiné à réduire les interférences hors bande ;
un amplificateur RF (126) destiné à amplifier une sortie dudit filtre passe-bande (124) ;
un élément de division de puissance (128) destiné à diviser de manière identique une sortie dudit amplificateur RF (126) en une première sortie et une seconde sortie ;
un oscillateur à haute fréquence (129) ;
un élément de déphasage de 90 degrés (132) ;
un premier mélangeur (130) destiné à convertir ladite première sortie dudit élément de division de puissance (128) en un premier signal de bande de base (I) avec un signal hétérodyne provenant dudit oscillateur à haute fréquence (129) ;
un second mélangeur (130) destiné à convertir ladite seconde sortie dudit élément de division de puissance (128) en un second signal de bande de base (Q) avec un signal provenant dudit oscillateur à haute fréquence (129), déphasé de 90 degrés par ledit élément de déphasage de 90 degrés (132) ;
une pluralité de filtres passe-bas (134) destinés à empêcher la confusion entre ledit premier signal de bande de base (I) et ledit second signal de bande de base (Q) ;
une pluralité de convertisseurs analogiques numériques (129) destinés à convertir ledit premier signal de bande de base (I) en un premier échantillon de signal numérique (I(n)) et à convertir ledit second signal de bande de base (Q) en un second échantillon de signal numérique (Q(n)) ; et
une unité de traitement de signal numérique (138) destinée à produire lesdits vecteurs de signal de sortie (140) à partir d'entrées desdits premiers échantillons de signal numérique (I(n)) et desdits seconds échantillons de signal numérique (Q(n)) ;
lesdits composants (124, 126, 128, 129, 130, 132, 134, 136, 138) de ladite section d'échantillonnage de bande de base (123) coopérants ensemble pour produire une estimation de puissance moyenne pour des segments de ladite bande de fréquences radio (125) et pour produire ledit vecteur de sortie (140).

15. Système de communication par satellite selon l'une quelconque des revendications 11 à 14, dans lequel ledit terminal d'utilisateur (20) est conçu pour suivre et rendre compte de la position et de l'environnement d'un objet en déplacement, ledit système comprenant:
un module de système de positionnement global (210), dénommé ci-après GPS ; et
une instrumentation d'environnement (256) ;
ledit module GPS (210) et ladite instrumentation d'environnement (256) étant couplés audit modem (200) et délivrant des informations de position géographique et données d'environnement qui sont ensuite transmises sous forme de données numériques à un composant de réception par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et/ou de ladite liaison terrestre (51) afin de minimiser ladite durée pour transmettre lesdites données numériques audit composant de réception.

16. Système de communication par satellite selon l'une quelconque des revendications 11 à 15, dans lequel ledit terminal d'utilisateur (20) est conçu pour contrôler des données provenant de systèmes, dispositifs mobiles et dispositifs avec de faibles débits numériques contenus à l'intérieur d'une structure (292) qui assure l'isolation d'un signal radio d'utilisateur par rapport audit satellite (12), comprenant, en outre:
un dispositif numérique d'entrée (291) destiné à délivrer des informations commerciales et/ou de fabrication numériques ;
un système de service de communication personnel, dénommé ci-après PCS, (294), situé à l'intérieur de ladite structure (292) ;
un dispositif de couplage (296) ;
ledit dispositif numérique d'entrée (291) étant couplé à une entrée dudit système PCS (294) par l'intermédiaire dudit dispositif de couplage (296) ;
ledit système PCS (294) étant couplé par une sortie audit modem (200) dudit terminal d'utilisateur (20) ; et
lesdites informations commerciales et/ou de fabrication étant relayées à partir dudit dispositif numérique d'entrée (291) par l'intermédiaire dudit système PCS vers ledit modem (20) pour être transmis par ledit terminal d'utilisateur (20) à un composant de réception par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et/ou de ladite liaison terrestre (51) afin de minimiser ladite durée pour transmettre lesdites données numériques vers ledit composant de réception.

17. Système de communication par satellite selon l'une quelconque des revendications 11 à 15, conçu pour un système de télévision interactif (260) qui utilise une programmation de télévision directe délivrée par un fournisseur de radiodiffusion, comprenant, en outre:
un système d'antenne (265) comportant
une petite antenne de télévision en coupelle (264) destinée à recevoir un signal de satellite de télévision (261) et une antenne en fouet (262) destinée à assurer la communication avec lesdits satellites de communication (12) ;
un convertisseur de télévision (266) couplé audit modem (200) ;
un récepteur de télévision (272) destiné à afficher ledit signal de satellite de télévision à un utilisateur ;
un dispositif d'entrée de données (268) ;
ledit utilisateur pouvant entrer des réponses de manière interactive vers ledit fournisseur de radiodiffusion de programme de télévision au moyen dudit dispositif d'entrée de données (268) ; et
lesdites réponses étant transmises par ledit terminal d'utilisateur (20) vers l'un desdits satellites de communication (12) afin de les délivrer audit fournisseur de radiodiffusion par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et/ou de ladite liaison terrestre (51) afin de minimiser ladite durée pour transmettre lesdites données numériques vers ledit composant de réception.

18. Système de communication par satellite selon l'une quelconque des revendications 11 à 15, dans lequel ledit terminal d'utilisateur (20) est conçu pour contrôler le fonctionnement d'un éclairage public (310).

19. Système de communication par satellite selon l'une quelconque des revendications 11 à 15, dans lequel ledit terminal d'utilisateur (20) est conçu pour contrôler le fonctionnement d'un distributeur automatique (314).

20. Système de communication par satellite selon l'une quelconque des revendications 11 à 15, dans lequel ledit terminal d'utilisateur (20) est conçu afin de contrôler le contenu d'une boîte à lettre et/ou d'une boîte postale (312).

21. Système de communication par satellite selon l'une quelconque des revendications 11 à 15, dans lequel ledit terminal d'utilisateur (20) est conçu pour contrôler le fonctionnement de feux de signalisation aéronautique installés sur des immeubles de grande hauteur et/ou structures dangereuses (316), comprenant des pylônes électriques, de transmission radio ou de télévision.

22. Système de communication par satellite selon l'une quelconque des revendications précédentes, dans lequel chacun desdits satellites de communication (12) opère sur des orbites qui peuvent être, de préférence, des orbites elliptiques, ou des orbites elliptiques avec des distances focales présentant des longueurs différentes, des orbites circulaires étant préférables, supportant les spécifications de puissance les plus faibles pour les émetteurs de terminaux d'utilisateur.

23. Procédé d'établissement de communications avec un système de communication par satellite, comprenant les étapes de:
déploiement d'une constellation (10) comprenant une pluralité de satellites de communication (12) suivant une pluralité de plans d'orbite terrestre basse ;
mise en place d'une pluralité de terminaux d'utilisateur (20) de manière répartie sur la terre (E) ;
mise en place d'une pluralité de stations relais (18) de manière répartie à certains emplacements sur la terre (E) afin de faciliter la transmission d'un message entre un terminal quelconque de ladite pluralité de terminaux d'utilisateur (20) et/ou la constellation de satellites de communication (12) et une destination ;
chacun de ladite pluralité de satellites (12) pouvant communiquer avec au moins une station relais de ladite pluralité de stations relais (18) et avec au moins un terminal de ladite pluralité de terminaux d'utilisateur (20) ;
le procédé étant caractérisé en ce que:
lesdits satellites sont déployés à une altitude comprise entre 100 km et 1200 km ;
lesdits plans orbitaux comprennent quatre paires de plans orbitaux inclinés ;
chacune desdites paires comprend un plan orbital incliné (14) et un plan orbital incliné conjugué (15) ;
ledit plan orbital incliné (14) et ledit plan incliné conjugué (15) comprenant chacun un noeud ascendant (40a) et un noeud descendant (40b) ;
et ledit noeud ascendant (40a) dudit plan orbital incliné (14) est décalé de 180 degrés approximativement en ascension droite par rapport au noeud descendant (40a) dudit plan incliné conjugué (15), de telle sorte que les noeuds ascendants des huit plans orbitaux inclinés se produisent pour des angles d'ascension droits d'approximativement 0, 45, 90, 135, 180, 225, 270 et 315 degrés,
et en ce qu'il est établi une liaison terrestre (51) et un raccordement entre au moins deux stations relais de ladite pluralité de stations relais (18) sur ladite liaison terrestre (51), lesdites stations relais (18) permettant établir une communication avec chaque autre par l'intermédiaire d'une liaison par satellite et lesdites stations relais (18) effectuant une sélection entre lesdites liaisons terrestres et par satellite afin de transmettre lesdits messages entre lesdits terminaux d'utilisateur (20).

24. Procédé selon la revendication 23, dans lequel l'étape d'établissement d'une liaison terrestre (51) comprend l'étape de
raccordement d'au moins deux stations relais de ladite pluralité de stations relais (18) à un réseau téléphonique commuté public, nommé ci-après PSTN.

25. Procédé selon la revendication 23 ou 24, dans lequel l'étape de déploiement d'une constellation (10) de satellites de communication (12) comprend, en outre, les étapes de:
mise en place sur chaque satellite de ladite pluralité de satellites (12) d'une charge utile de communication (120) afin d'établir une liaison ascendante relais-satellite (48a) et une liaison descendante relais-satellite (48b) de manière à assurer la communication avec au moins une station relais de ladite pluralité de stations relais (18) ;
mise en place sur chaque satellite de ladite pluralité de satellites (12) d'une charge utile de communication (120) afin d'établir une liaison descendante terminal-satellite (50b) et une liaison ascendante terminal-satellite (50a), de manière à assurer la communication avec au moins un terminal d'utilisateur de ladite pluralité de terminaux d'utilisateur (20) ;
mise en place sur chaque station relais de ladite pluralité de stations relais (18) d'un émetteur de liaison ascendante relais-satellite (232), d'un récepteur de liaison descendante relais-satellite (234), d'une liaison de terminal à très faible largeur de faisceau VSAT (53) de manière à assurer la communication avec un satellite de communication géostationnaire (52) et d'une interface de liaison terrestre (51) ; et
utilisation de ladite liaison ascendante relais-satellite (48a), de ladite liaison descendante relais-satellite (48b), de ladite liaison de terminal à très faible largeur de faisceau (53) et de ladite liaison terrestre (51) de manière à assurer la communication entre l'une desdites stations relais (18) et/ou une autre desdites stations relais (18) et avec lesdits terminaux d'utilisateur (20).

26. Procédé selon la revendication 25, comprenant, en outre, les étapes de:
communication dudit message provenant d'un terminal d'utilisateur de ladite pluralité de terminaux d'utilisateur (20) comportant un modem (200), par l'intermédiaire de ladite liaison ascendante terminal-satellite (50a) à un satellite de ladite pluralité de satellites (12) ;
mémorisation dudit message à bord dudit satellite (12) ; et
transmission dudit message vers ladite destination par l'intermédiaire d'une telle combinaison desdites liaisons station relais-satellite (48a, 48b), de ladite liaison descendante terminal-satellite (50b), de ladite liaison terrestre (51) et de ladite liaison VSAT (53) afin de minimiser la durée requise pour transmettre un message.

27. Procédé selon la revendication 25 ou 26, comprenant, en outre, les étapes de:
contrôle des signaux de bande d'entrée (125) envoyés sur ladite liaison ascendante terminal-satellite (50a) à une fréquence radio ;
élaboration d'une sortie d'une pluralité de vecteurs de sortie de signal obtenus rapidement (140) à partir d'une estimation de puissance moyenne correspondant aux signaux de bande d'entrée (125) contrôlés avec un système d'affectation dynamique de canal adaptatif, à bord de chaque satelitte de ladite pluralité de satellites (12) ; lesdits vecteurs de sortie de signal (140) contenant des informations sur les canaux de fréquence couramment inoccupés ; et
affectation des canaux de fréquence inoccupés à chaque terminai d'utilisateur de ladite pluralité de terminaux d'utilisateur (20) avec ledit système d'affectation de canal adaptatif.

28. Procédé selon l'une quelconque des revendications 25 à 27, dans lequel l'étape de répartition d'une pluralité de terminaux d'utilisateur (20) comprend les étapes de:
déploiement d'une bouée (252) on un emplacement maritime ;
ladite bouée (252) contenant une instrumentation d'environnement et météorologique (256) pour assurer la collecte de données d'environnement ; et/ou
d'un dispositif d'écoute sous-marine (254) destiné à collecter des données de suivi de navire ; et/ou
d'un dispositif de détermination de position (LORAN, GPS) afin de collecter des données de positionnement ; et
d'un terminal d'utilisateur de ladite pluralité de terminaux d'utilisateur (20) afin de transmettre lesdites données d'environnement, de suivi et/ou de positionnement par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et de ladite liaison terrestre (51) afin de minimiser la durée requise pour transmettre lesdites données.

29. Procédé selon l'une quelconque des revendications 25 à 27, dans lequel l'étape de répartition d'une pluralité de terminaux d'utilisateur (20) comprend les étapes de:
mise en place d'un système d'antenne (256) sur un site d'un téléspectateur ;
ledit système d'antenne (256) comprenant une première antenne de réception (264) destinée à recevoir des signaux de télévision radiodiffusés (261) délivrés par un fournisseur de radiodiffusion à partir d'un satellite de radiodiffusion directe (282), et comprenant une seconde antenne (262) afin d'assurer la communication avec un satellite (12) de ladite constellation (10) ;
mise en place d'un convertisseur/dispositif de réglage de télévision (266) comprenant un modem (200) ; ledit convertisseur/dispositif de réglage de télévision (266) étant couplé audit système d'antenne (256) ;
couplage d'un dispositif d'entrée (268) destiné à entrer des données et d'un récepteur de télévision (272) destiné à afficher lesdits signaux de télévision (261), audit convertisseur/dispositif de réglage de télévision (266) ; et
envoi par ledit téléspectateur de réponses auxdits signaux de télévision radiodiffusés (261) affichés sur ledit récepteur de télévision (272) audit fournisseur de radiodiffusion an entrant lesdites réponses sur ledit dispositif d'entrée de données (268) et transmission desdites réponses par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et de ladite liaison terrestre (51) afin de minimiser la durée requise pour transmettre lesdites données.

30. Procédé selon l'une quelconque des revendications 25 à 27, dans lequel l'étape de répartition d'une pluralité de canaux d'utilisateur (20) comprend les étapes de:
établissement de communications vers un ou plusieurs desdits satellites (12) dans ladite constellation de satellites de communication (10), à partir de dispositifs mobiles (291) qui sont isolés des signaux radio (50a, 50b) émis et reçus par lesdits satellites (12) par une structure naturelle ou construite par l'homme (292), en relayant les données provenant desdits dispositifs mobiles (291) par l'intermédiaire d'un système de communication personnel à faible puissance (294) vers un terminal d'utilisateur proche (298) communiquant avec au moins un satellite de ladite pluralité de satellites (12).

31. Procédé selon l'une quelconque des revendications 25 à 27, dans lequel l'étape de répartition de manière aléatoire d'une pluralité de terminaux d'utilisateur (20) comprend les étapes de:
couplage d'un terminal d'utilisateur de ladite pluralité de terminaux d'utilisateur (20) à une horloge dans un système d'horloge local ; ledit système d'horloge local répondant à des signaux de temps coordonné universel (UTC) ;
obtention desdits signaux de temps coordonné universel, dénommé ci-après UTC, délivrés par le Bureau National des Standards par l'intermédiaire d'une liaison de communication (50a, 51) ;
radiodiffusion desdits signaux de temps coordonné universel (UTC) par l'intermédiaire desdits satellites (12) dans ladite constellation (10) ;
réception desdits signaux de temps coordonné universel (UTC) sur un terminal d'utilisateur de ladite pluralité de terminaux d'utilisateur (20) ;
transmission desdits signaux de temps coordonné universel (UTC) vers ledit système d'horloge local ; et
synchronisation de ladite horloge dans ledit système d'horloge local par rapport auxdits signaux de temps coordonné universel (UTC).

32. Procédé selon l'une quelconque des revendications 25 à 27, dans lequel l'étape de répartition d'une pluralité de terminaux d'utilisateur (20) comprend les étapes de:
couplage d'un terminal d'utilisateur (20) à un dispositif de surveillance relié à un système installé à distance ;
ledit dispositif de surveillance délivrant un signal indiquant un fonctionnement correct dudit système installé à distance à un terminal de ladite pluralité de terminaux d'utilisateur (20) ;
surveillance du fonctionnement correct dudit système installé à distance avec ledit dispositif de surveillance ; et
émission dudit signal par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et/ou de ladite liaison terrestre (51) afin de minimiser la durée requise pour transmettre lesdites données.

33. Procédé selon l'une quelconque des revendications 25 à 27, comprenant, en outre, les étapes de:
obtention d'informations commerciales en temps réel par l'intermédiaire d'une ou plusieurs liaisons de communication (50a, 51) ;
radiodiffusion desdites informations commerciales par l'intermédiaire desdits satellites (12) dans ladite constellation (10) ; et
réception desdites informations commerciales sur un ou plusieurs terminaux d'utilisateur de ladite pluralité de terminaux d'utilisateur (20) afin de les utiliser dans des transactions commerciales.

34. Procédé selon l'une quelconque des revendications 25 à 27, comprenant, on outre, l'étape d'exécution de ladite liaison ascendante terminal-satellite (50a), de ladite liaison descendante terminal-satellite (50b), de ladite liaison ascendante relais-satellite (48a), de ladite liaison descendante relais-satellite (48b) à des fréquences radio affectées à des systèmes par satellite mobiles non vocaux non géosynchrones.

35. Procédé selon l'une quelconque des revendications 25 à 27, conçu pour assurer le suivi et rendre compte de la position et de l'environnement d'un objet mobile, comprenant, on outre, les étapes de:
mise on place d'un module de système de positionnement global (GPS) (210) ;
mise on place d'une instrumentation d'environnement (256) ;
couplage dudit module GPS (210) et de ladite instrumentation d'environnement (256) audit modem (200) et fourniture d'informations de position géographique et de données d'environnement audit terminal d'utilisateur (20) par l'intermédiaire dudit modem (200) ; et
émission desdites informations sous forme de données numériques vers un composant de réception par l'intermédiaire d'une telle combinaison desdites liaisons station relais-satellite (48a, 48b), de ladite liaison descendante terminal-satellite (50b), de ladite liaison VSAT (53) et de ladite liaison terrestre (51) afin de minimiser la durée requise pour transmettre lesdites données.

36. Procédé selon l'une quelconque des revendications 25 à 27, conçu pour surveiller des données à partir de systèmes, dispositifs mobiles et/ou dispositifs présentant des faibles débits numériques, contenus à l'intérieur d'une structure (292) qui isole un signal radio d'utilisateur par rapport audit satellite (12), comprenant, on outre, les étapes de:
fourniture d'informations commerciales et/ou de fabrication avec un dispositif numérique d'entrée (291) ;
mise en place d'un système de service de communication personnel, dénommé ci-après PCS, (294) à l'intérieur de ladite structure (292) ;
raccordement dudit dispositif numérique d'entrée à une entrée dudit service PCS avec un dispositif de couplage (296) ;
couplage dudit système PCS (294) par une sortie audit modem (200) dudit terminal d'utilisateur (20) ; et
relais desdites informations commerciales et/ou de fabrication provenant dudit dispositif numérique d'entrée (291) par l'intermédiaire dudit système PCS vers ledit modem (200) ; et
émission desdites informations commerciales et/ou de fabrication avec ledit terminal d'utilisateur (20) vers un composant de réception par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et/ou de ladite liaison terrestre (51) afin de minimiser la durée requise pour transmettre lesdites données.

37. Procédé selon la revendication 36, dans lequel ladite étape de fourniture d'informations commerciales et/ou de fabrication avec un dispositif numérique d'entrée (291) comprend le contrôle de données provenant d'un équipement installé à distance représentatives d'un mauvais fonctionnement et/ou de la nécessité de réparation.

38. Procédé selon la revendication 32 ou 37, dans lequel l'étape de contrôle de données provenant d'un équipement installé à distance représentatives d'un mauvais fonctionnement et/ou de la nécessité de réparation, comprend le contrôle du fonctionnement d'un éclairage public (310).

39. Procédé selon la revendication 32 ou 37, dans lequel l'étape de contrôle de données provenant d'un équipement installé à distance représentatives d'un mauvais fonctionnement et/ou de la nécessité de réparation, comprend le contrôle du fonctionnement d'un distributeur automatique (314).

40. Procédé selon la revendication 32 ou 37, dans lequel l'étape de contrôle de données provenant d'un équipement installé à distance représentatives d'un mauvais fonctionnement et/ou de la nécessité de réparation, comprend le contrôle du contenu d'une boîte à lettre et/ou d'une boîte postale (312).

41. Procédé selon la revendication 32 ou 37, dans lequel l'étape de contrôle de données provenant d'un équipement installé à distance représentatives d'un mauvais fonctionnement et/ou de la nécessité de réparation, comprend le contrôle du fonctionnement de feux de signalisation aéronautique installés dans des immeubles de grande hauteur et/ou structures dangereuses (316), comprenant des pylônes électriques, de transmission radio ou de télévision.

42. Procédé selon l'une quelconque des revendications 25 à 27, conçu pour un système de télévision interactive (260) qui utilise la programmation directe de télévision fournie par un fournisseur de radiodiffusion, comprenant, en outre, les étapes de:
mise en place d'un système d'antenne (265) comprenant:
une petite antenne de télévision en coupelle (264) afin de recevoir un signal de satellite de télévision (261) et une antenne en fouet (262) afin d'assurer la communication avec lesdits satellites de système de télécommunication (12) ;
couplage d'un convertisseur de télévision (266) audit modem (200) ;
envoi dudit signal de satellite de télévision à un utilisateur sur un récepteur de télévision (272) ;
couplage d'un dispositif d'entrée de données (268) audit modem (200) ;
entrée de réponses interactives d'utilisateur audit affichage de télévision dans ledit dispositif d'entrée de données (268), conversion à l'intérieur de ce dernier desdites réponses en données numériques et entrée desdites données numériques dans ledit modem (200) ; et
émission desdites réponses entrées dans ledit modem (200) à partir dudit terminal d'utilisateur (20) vers l'un desdits satellites de couverture optimale (12) afin de les délivrer audit fournisseur de radiodiffusion par l'intermédiaire d'une telle combinaison de ladite liaison ascendante terminal-satellite (50a), desdites liaisons station relais-satellite (48a, 48b), de ladite liaison descendante terminal-satellite (50b), de ladite liaison VSAT (53) et de ladite liaison terrestre (51) afin de minimiser la durée requise pour transmettre lesdites données.

43. Procédé selon l'une quelconque des revendications 25 à 27, conçu pour synchroniser des horloges n'importe où dans le monde, comprenant, en outre, les étapes de:
contrôle des signaux de temps coordonné universel (UTC) et d'autres données standards de temps à partir du Bureau National des Standards, diffusés par l'intermédiaire d'une station radio à onde courte WWV, reçus par un satellite de ladite pluralité de satellites (12) dans ladite constellation (10) et émis vers ledit terminal d'utilisateur (20) par l'intermédiaire de ladite liaison descendante terminal-satellite (50b) ;
décodage desdits signaux sur ledit modem (200) dans ledit terminal d'utilisateur (20) ; et
envoi desdits signaux décodés à une horloge couplée audit modem (200) ; et
synchronisation de ladite horloge avec le temps (UTC).

44. Procédé selon la revendication 23, dans lequel chaque satellite comporte une charge utile de communication (120) avec un sous-système informatique comprenant une mémoire, dans lequel le sous-système informatique peut traiter des messages et/ou des données reçus, les mémoriser dans ladite mémoire et les retransmettre tels quels plus tard vers un terminal quelconque de ladite pluralité de terminaux d'utilisateur (20) et une station quelconque desdites stations relais (18), de telle sorte que le système de communication de satellite constitue un système de mémorisation et de transmission.

45. Procédé selon la revendication 44, dans lequel ledit sous-système informatique réalise aussi des affectations de canal.

46. Procédé selon la revendication 44 ou 45, dans lequel l'étape de déploiement d'une constellation (10) de satellites de communication (12) comprend l'étape de déploiement de quarante huit satellites (12) dans ladite pluralité de paires de plans orbitaux inclinés (22), comprenant huit plans orbitaux circulaires (14, 15), six desdits satellites (12) opérant dans chaque plan orbital desdits huit plans orbitaux circulaires (14, 15) à une altitude de 950 km approximativement.
